# EUROPEAN PATENT APPLICATION

(11) **EP 4 471 073 A1**
(43) Date of publication of application: **04.12.2024**
(21) Application number: 22924188.0
(22) Date of filing: 23.12.2022
(51) Int. Cl.: C08G 59/50, C08G 59/32, C08J 5/04, C08J 5/24

(54) **CURING AGENT COMPOSITION FOR THERMOSETTING RESIN, EPOXY RESIN COMPOSITION, AND FIBER-REINFORCED COMPOSITE MATERIAL**

(30) Priority: 28.01.2022 JP 2022011654; 15.03.2022 JP 2022039840; 05.09.2022 JP 2022140557
(71) Applicant: Teijin Limited, Osaka 530-0005 (JP)
(72) Inventor: OZAWA Suguru, Osaka-shi Osaka 530-0005 (JP); ODA Akimichi, Osaka-shi Osaka 530-0005 (JP); OSAKI Kohei, Osaka-shi Osaka 530-0005 (JP)
(74) Representative: Carpmaels & Ransford LLP
(86) International application number: PCT/JP2022/047536
(87) International publication number: WO 2023/145341

(57) **Abstract**

Provided is a curing agent composition for thermosetting resin containing a curing agent A, a curing agent B, and a curing agent C, wherein the curing agent A is an aromatic polyamine having a substituent selected from an alkyl group, an aromatic group, and a halogen group at each of two ortho positions of an amino group, the curing agent B is an aromatic polyamine that is liquid at 25°C, and the curing agent C is a monoamine having an aromatic substituent, which enables production of an epoxy resin composition having a low viscosity and a long pot life.

## Description

### [Technical Field]

The present invention relates to a curing agent composition for thermosetting resin, an epoxy resin composition, and a fiber-reinforced composite material.

### [Background Art]

Fiber-reinforced composite materials (hereinafter, may be referred to as "FRP") are lightweight, and have high strength and high rigidity. Therefore, FRP is used in a wide range of applications such as sports and leisure applications of fishing rods, golf shafts, and the like, and industrial applications of automobiles, aircraft, and the like.

A known method for molding FRP using a thermosetting resin as the matrix resin is the resin transfer molding (hereinafter, may be referred to as "RTM") method, in which a fiber reinforcing base material placed in a mold in advance is impregnated with a liquid resin composition and then cured to obtain the FRP. Another known molding method is preparing a sheet-like prepreg (intermediate base material) of a fiber reinforcing base material impregnated with a resin composition, which is then molded into a desired shape.

In recent years, attention has been focused on the RTM method, which requires few steps for producing FRP and does not require expensive equipment such as an autoclave and thus can produce fiber-reinforced composite materials at low cost and with high productivity. The liquid resin composition used in the RTM method is an epoxy resin composition containing an epoxy base resin and a curing agent.

In order to obtain resin cured products and FRP with high mechanical properties, aromatic polyamines are known for use as curing agents.

The epoxy resin composition used in the RTM method is often stored in a dissolved state of the curing agent in the epoxy base resin in order to prevent the curing agent from being filtered out during the impregnation into the fiber reinforcing base material. Such an epoxy resin composition in which a curing agent is dissolved in the epoxy base resin is called a one-component epoxy resin composition.

In the one-component epoxy resin composition, the curing agent present in a dissolved state in the epoxy base resin is relatively likely to react with the epoxy base resin, causing a problem of shortening the shelf life of the epoxy resin composition. Therefore, it has been necessary to store the one-component epoxy resin composition in a frozen state.

In order to solve this problem, proposed is a two-component epoxy resin composition in which an epoxy base resin and a curing agent are mixed just before use. The two-component epoxy resin composition is composed of a base resin liquid containing an epoxy base resin as a main component and a curing agent liquid containing a curing agent as a main component, and the epoxy resin composition is obtained by mixing the two just before use.

In a two-component epoxy resin composition, easy mixing of the epoxy base resin liquid and the curing agent liquid is important. Although the curing agent used in the one-component epoxy resin composition can also be used as the curing agent here, the curing agent of aromatic polyamine used in the one-component epoxy resin composition is usually a solid as described in PTL 1, and is likely to cause insufficient mixing with the epoxy base resin liquid. Therefore, the curing agent is desirably also liquid form in the two-component epoxy resin composition.

As an epoxy resin composition using a curing agent of a liquid aromatic polyamine, those described in PTLs 2 and 3 are known. However, resin cured products obtained from these epoxy resin compositions do not sufficiently have mechanical properties such as elastic modulus and fracture toughness.

In the RTM method, fast curability is necessary to produce FRP at high efficiency. PTL 4 proposes a fast-curable two-component epoxy resin composition using a compound having two or more aromatic rings having phenolic hydroxy groups.

However, addition of a compound having a phenolic hydroxy group to the epoxy resin composition rapidly increases the viscosity of the resin composition due to its high reactivity, and extremely shortens the pot life in RTM molding. As a result, a sufficient amount of the resin composition is hardly impregnated into the reinforcing fiber base material.

Therefore, FRP produced using such an epoxy resin composition is to contain many defects such as voids. As a result, structures using the FRP have low compressive performance and damage tolerance.

### [Citation List]

### [Patent Literature]

[PTL 1] JP-A-2014-148572
[PTL 2] JP-A-2015-193713
[PTL 3] WO2009/119467
[PTL 4] Japanese Patent No. 6617559

### [Summary of Invention]

### [Technical Problem]

There has been no two-component epoxy resin composition which has a sufficiently low viscosity and a long pot life and allows production of a resin cured product having the heat resistance and mechanical properties required for industrial applications such as automobiles and aircraft, nor a curing agent composition for thermosetting resin used in producing the composition.

An object of the present invention is to provide a curing agent composition for thermosetting resin that allows production of an epoxy resin composition having a low viscosity and a long pot life.

Further, an object is to provide a curing agent composition for thermosetting resin that becomes a uniform liquid at a temperature of 200°C or lower by heating and then, at room temperature, can maintain the uniform liquid state for one week or longer.

Further, another object of the present invention is to provide a cured product of an epoxy resin composition and a fiber-reinforced composite material that have excellent mechanical properties.

### [Solution to Problem]

The present invention is a curing agent composition for thermosetting resin, comprising curing agent A, curing agent B, and curing agent C, wherein curing agent A is an aromatic polyamine having a substituent selected from an alkyl group, an aromatic group, and a halogen group at each of two ortho positions of an amino group, curing agent B is an aromatic polyamine that is liquid at 25°C, and curing agent C is a monoamine having an aromatic substituent.

The present invention is also an epoxy resin composition containing the above-mentioned curing agent composition for thermosetting resin, and epoxy resin D and epoxy resin E, wherein epoxy resin D is an epoxy resin constituted by a monomer containing four or more glycidyl groups, and epoxy resin E is an epoxy resin constituted by a monomer containing two or three glycidyl groups.

The present invention is also an epoxy resin cured product obtained by curing any one of the above epoxy resin compositions.

The present invention is also a fiber-reinforced composite material containing the epoxy resin cured product and a fiber reinforcing base material.

The present invention is also a curing agent composition for thermosetting resin, comprising curing agent C, wherein curing agent C is a monoamine having an aromatic substituent.

In a preferred embodiment of the present invention, the curing agent C of monoamine having an aromatic substituent has two or more substituents.

In a preferred embodiment of the present invention, the curing agent C of monoamine having an aromatic substituent is a benzylamine derivative.

### [Advantageous Effects of Invention]

In accordance with the present invention, there can be provided a curing agent composition for thermosetting resin that allows production of an epoxy resin composition having a low viscosity and a long pot life.

Further, there can be provided a curing agent composition for thermosetting resin that becomes a uniform liquid at a temperature of 200°C or lower by heating and then, at room temperature, can maintain the uniform liquid state for one week or longer.

The present invention further can provide a cured product of the epoxy resin composition and a fiber-reinforced composite material having excellent mechanical properties.

### [Description of Embodiments]

The present invention will be described in detail below. A fiber-reinforced composite material may be abbreviated as "FRP", and a carbon fiber-reinforced composite material as "CFRP".

### [Curing agent composition for thermosetting resin]

The curing agent composition for thermosetting resin of the present invention is a curing agent composition for thermosetting resin containing the following curing agent A, curing agent B, and curing agent C. This curing agent composition for thermosetting resin becomes a uniform liquid by heating to a temperature of 80 to 200°C.

The curing agent composition for thermosetting resin of the present invention becomes a uniform liquid at a temperature of 80 to 200°C; keeps a uniform liquid after ramp up to 200°C, ramp down to 25°C, and standing at 25°C for 1 week; preferably keeps a uniform liquid after standing for further 2 weeks (3 weeks in total); and particularly preferably keeps a uniform liquid after standing for 1 month in total.

The period of keeping a uniform liquid state is less than 1 week after ramp up to 200°C, ramp down to 25°C, and standing at 25°C will cause substantial difficulty in handling the curing agent composition for thermosetting resin in a liquid state, and be likely to cause insufficient mixing with the base resin liquid, which is not preferable.

### [Curing agent A]

Curing agent A is an aromatic polyamine having a substituent selected from an alkyl group, an aromatic group, and a halogen group at each of two ortho positions of an amino group. In addition, curing agent A is solid at 25°C. Containing curing agent A, when cured as a composition with an epoxy resin, makes it possible to obtain an epoxy resin cured product having excellent heat resistance and mechanical properties such as elastic modulus, and fracture toughness.

A compound represented by the following chemical formula (1) can be used as the aromatic polyamine having a substituent at each of two ortho positions of the amino group, which is used as the curing agent A.

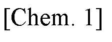

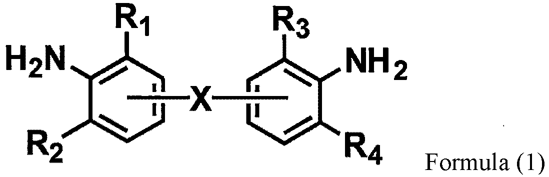

In the above chemical formula (1), R₁ to R₄ are each independently an aliphatic substituent, an aromatic substituent, an alkoxy group, or a halogen atom, and at least one substituent is an aliphatic substituent having 1 to 6 carbon atoms, an aromatic substituent, or a halogen atom. X is -CH₂-, -CH(CH₃)-, -C(CH₃)₂-, -S-, -O-, -SO₂-, -CO-, -CONH-, - NHCO-, -C(=O)-, or -O-C(=O)-.

In the chemical formula (1), examples of aliphatic substituents having 1 to 6 carbon atoms include methyl group, ethyl group, propyl group, isopropyl group, n-butyl group, sec-butyl group, tert-butyl group, n-pentyl group, neopentyl group, n-hexyl group, and cyclohexyl group. Examples of aromatic substituents include phenyl group and naphthyl group.

The aromatic polyamine of curing agent A is preferably aromatic diamines, among which a 4,4'-diaminodiphenyl methane derivative is particularly preferred.

Specific examples of the aromatic polyamines include compounds represented by the following chemical formulas (2) to (5). These may be used alone or in combination.

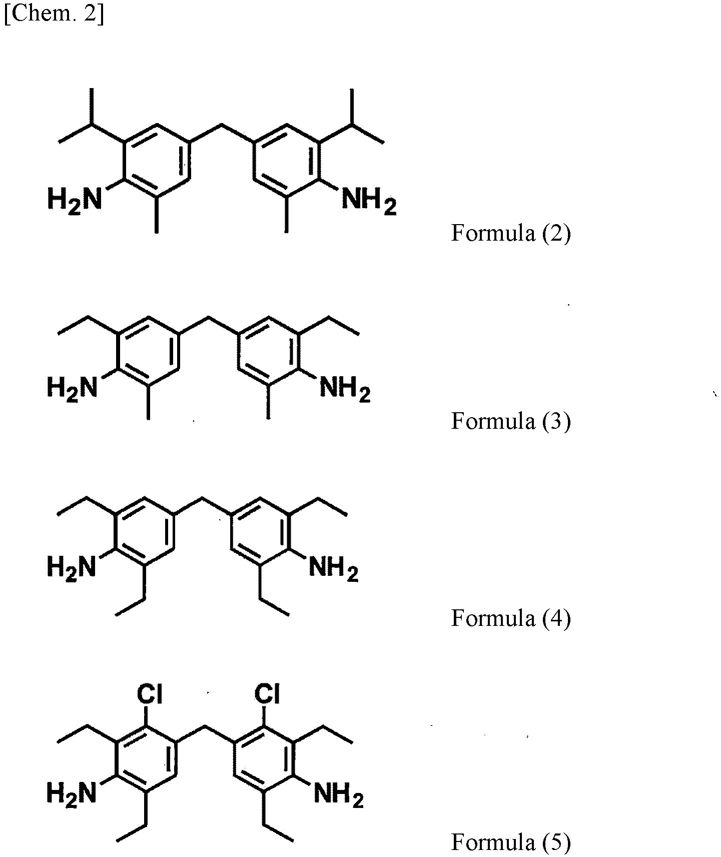

### [Curing agent B]

Curing agent B is an aromatic polyamine that is liquid at 25°C. Containing the aromatic polyamine makes it possible to obtain a curing agent composition for thermosetting resin that can maintain a liquid state at room temperature.

As the aromatic polyamine of the curing agent B, preferably used is a phenylenediamine derivative or a 4,4'-diaminodiphenyl methane derivative. Examples of the aromatic polyamine include compounds represented by the following chemical formula (6) or (7).

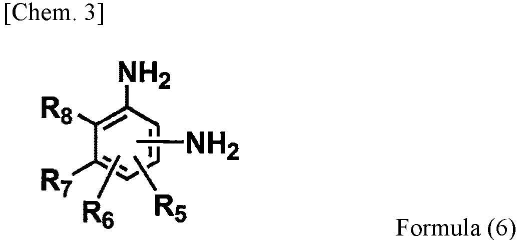

In the chemical formula (6), R₅ to R₈ are each independently a hydrogen atom, an aliphatic substituent, an alkoxy group, or a thioalkoxy group, and at least one substituent is an aliphatic substituent having 1 to 6 carbon atoms or a thioalkoxy group.

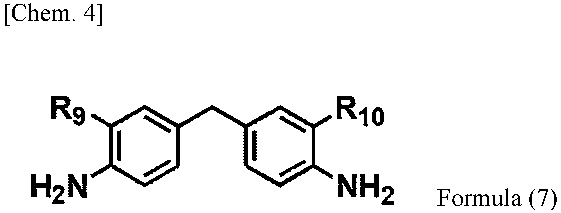

In the chemical formula (7), R₉ to R₁₀ are each independently an aliphatic substituent, a methoxy group, an alkoxy group or a thioalkoxy group.

Specific examples of the aromatic polyamine used as curing agent B include compounds represented by the following chemical formulas (8) to (12). These may be used alone or in combination.

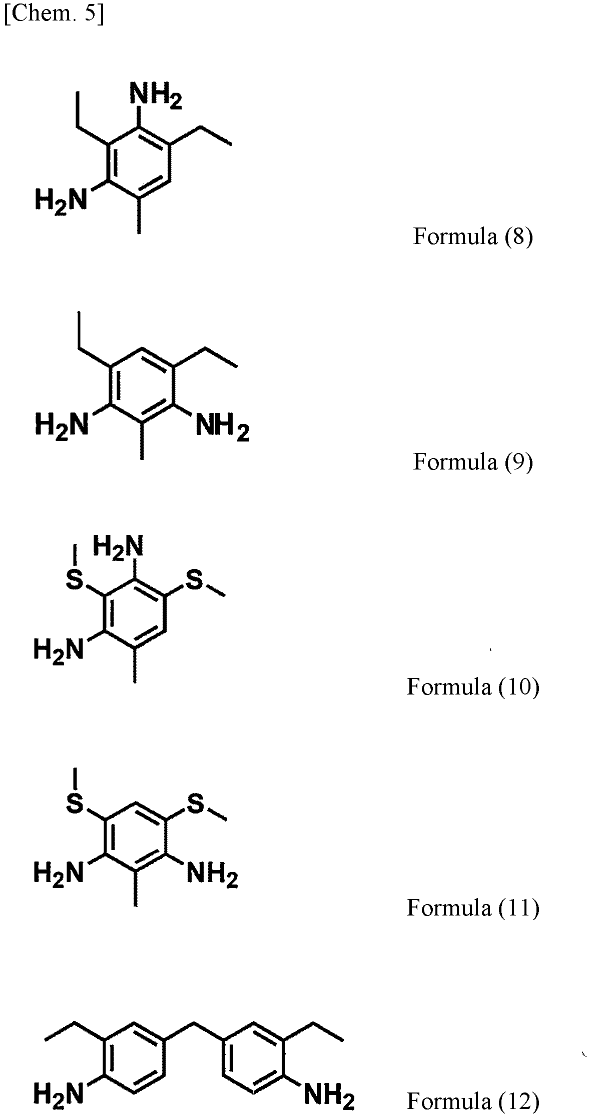

### [Curing agent C]

Curing agent C is a monoamine having an aromatic substituent. In the monoamine, the aromatic substituent may be bonded directly to the nitrogen atom or bonded to the nitrogen atom via an alkyl group.

In a first preferred embodiment of the present invention, the curing agent C of monoamine having an aromatic substituent has two or more substituents on the aromatic ring of the aromatic substituent. In this embodiment, the aromatic substituent is bonded directly to the nitrogen atom of the monoamine.

In a second preferred embodiment of the present invention, the curing agent C of monoamine having an aromatic substituent is a benzylamine derivative. The term "derivative" refers to a compound having one or more substituents on the benzene ring of the benzyl group.

### [Monoamine having aromatic substituent with two or more substituents]

In a first preferred embodiment of the present invention, the curing agent C of monoamine having an aromatic substituent is an aromatic compound having one amino group directly bonded to an aromatic ring in one molecule.

This amino group may be any of primary amine, secondary amine, and tertiary amine, and from the viewpoint of heat resistance of the cured product, is preferably a primary amine.

The aromatic ring of the aromatic substituent is, for example, benzene ring or naphthalene ring, and is preferably benzene ring. Examples of the substituent on the aromatic ring of the aromatic substituent include aliphatic group, alkoxy group, hydroxy group, carbonyl group, sulfonyl group, thioalkoxy group, and halogen atom. From the viewpoint of obtaining good reactivity, the substituent is preferably aliphatic group and/or alkoxy group.

In the curing agent C of monoamine having aromatic substituents, two of the substituents on the aromatic ring are particularly preferably an aliphatic group and/or an alkoxy group.

When the substituent is an aliphatic group, the aliphatic group is preferably an aliphatic group having 1 to 4 carbon atoms, such as a methyl group, an ethyl group, a propyl group, or a butyl group, and particularly preferably a methyl group.

Specific examples of the curing agent C of monoamine having an aromatic substituent include 2,5-dimethylaniline, 3,4-dimethylaniline, 2,4-dimethylaniline, 2,3-dimethylaniline, 3,5-di-tert-butylaniline, 4-methoxy-2-methylaniline, 5-methoxy-2-methylaniline, 2-methoxy-5-methylaniline, 2,3-dimethoxyaniline, 2,5-dimethoxyaniline, 3,5-dimethoxyaniline, 3,4-dimethoxyaniline, 3,4-diethoxyaniline, 2,5-diethoxyaniline, and 3,4,6-trimethoxyaniline, and preferred are 2,5-dimethylaniline, 3,4-dimethylaniline, 2,4-dimethylaniline, and 2,3-dimethylaniline, and further preferred is 2,5-dimethylaniline.

The curing agent C of monoamine having an aromatic substituent preferably has a melting point of 200°C or lower, more preferably 150°C or lower, and particularly preferably 120°C or lower. The melting point higher than 200°C makes it difficult to obtain a liquid composition when the curing agent C is mixed with curing agents A and B, and tends to make it difficult to maintain the obtained curing agent composition for thermosetting resin in a liquid state at room temperature, which is thus not preferable.

Containing the curing agent C of monoamine having an aromatic substituent facilitates the curing reaction of the obtained epoxy resin composition, and can impart fast curability to the epoxy resin composition.

### [Benzylamine derivative]

In a second preferred embodiment of the invention, the monoamine having an aromatic substituent is a benzylamine derivative.

When the curing agent C is a benzylamine derivative, the benzylamine derivative is benzylamine (cas number: 100-46-9) and a benzylamine having a substituent, which is a monoamine having an amino group at the benzylic position. The amino group of the benzylamine derivative may be any of a primary amine, a secondary amine, and a tertiary amine, and is preferably a primary amine from the viewpoint of heat resistance of the cured product.

The curing agent C of benzylamine derivative may have a substituent. Examples of the substituent include aliphatic group, alkoxy group, hydroxy group, carbonyl group, sulfonyl group, thioalkoxy group, and halogen atom. From the viewpoint of obtaining good reactivity, the substituent is preferably aliphatic group or alkoxy group.

When the substituent is an aliphatic group, the aliphatic group is preferably an aliphatic group having 1 to 4 carbon atoms, such as a methyl group, an ethyl group, an n-propyl group, an isopropyl group, an n-butyl group, an isobutyl group, a sec-butyl group, or a tert-butyl group, and particularly preferably a methyl group. When the substituent is an alkoxy group, the alkoxy group is a methoxy group, an ethoxy group, or a phenoxy group, and particularly preferred is a methoxy group. The substituent may be bonded to the aromatic ring of the benzylamine or to the benzylic position. In addition, the curing agent C may have a cyclic substituent such as piperonylamine.

Specific examples of the curing agent C of benzylamine derivative include benzylamine, 2-methylbenzylamine, 3-methylbenzylamine, 4-methylbenzylamine, 2,3-dimethylbenzylamine, 2,4-dimethylbenzylamine, 2,5-dimethylbenzylamine, 2,6-dimethylbenzylamine, 3,4-dimethylbenzylamine, 3,5-dimethylbenzylamine, 2-ethylbenzylamine, 3-ethylbenzylamine, 4-ethylbenzylamine, 4-isopropylbenzylamine, 4-tert-butylbenzylamine, 2-methoxybenzylamine, 3-methoxybenzylamine, 4-methoxybenzylamine, 2,3-dimethoxybenzylamine, 2,4-dimethoxybenzylamine, 2,5-dimethoxybenzylamine, 2,6-dimethoxybenzylamine, 3,4-dimethoxybenzylamine, 3,5-dimethoxybenzylamine, 3,4,5-trimethoxybenzylamine, 4-phenoxybenzylamine, 1-phenylethylamine, cumyl amine, 1-(p-tolyl)ethylamine, and piperonylamine; preferred are 2-methylbenzylamine, 3-methylbenzylamine, 4-methylbenzylamine, 4-isopropylbenzylamine, 4-tert-butylbenzylamine, cumylamine, 1-(p-tolyl)ethylamine, 2-methoxybenzylamine, 3-methoxybenzylamine, 4-methoxybenzylamine, 2,3-dimethoxybenzylamine, 2,4-dimethoxybenzylamine, 2,5-dimethoxybenzylamine, 2,6-dimethoxybenzylamine, 3,4-dimethoxybenzylamine, and 3,5-dimethoxybenzylamine; and more preferred are 4-methylbenzylamine, 3-methoxybenzylamine, 4-methoxybenzylamine, and 3,4-dimethoxybenzylamine. Particularly preferred is 4-methoxybenzylamine.

The curing agent C of benzylamine derivative preferably has a melting point of 200°C or lower, more preferably 150°C or lower, and particularly preferably 120°C or lower. The melting point higher than 200°C makes it difficult to obtain a liquid composition when the curing agent C is mixed with curing agents A and B, and tends to make it difficult to maintain the obtained curing agent composition for thermosetting resin in a liquid state at room temperature, which is thus not preferable.

The curing agent C of benzylamine derivative has a boiling point at normal pressure of preferably 180°C or higher, more preferably 200°C or higher, further preferably 230°C or higher, and particularly preferably 250°C or higher. The melting point lower than 180°C causes the curing agent C to volatilize during the process of mixing with an epoxy resin and heat curing to obtain a resin cured product, resulting in poor workability, which is not preferred.

Containing the curing agent C of benzylamine derivative facilitates the curing reaction of the obtained epoxy resin composition, and can impart fast curability to the epoxy resin composition.

### [Composition ratio of curing agent composition]

In the curing agent composition for thermosetting resin of the present invention, the mass ratio of curing agent A to curing agent B is preferably 1:99 to 99:1, more preferably 20:80 to 80:20, and particularly preferably 40:60 to 70:30. The mass ratio of curing agent A less than the above ratio tends to cause insufficient heat resistance and mechanical properties such as elastic modulus and fracture toughness to the obtained resin cured product, which is not preferable. In contrast, the mass ratio of curing agent A higher than the above ratio makes it difficult to maintain the obtained curing agent composition for thermosetting resin in a liquid state at room temperature, which is not preferable.

In the curing agent composition for thermosetting resin of the present invention, curing agent C is, with respect to a total of 100 parts by mass of curing agents A and B, preferably 1 to 43 parts by mass, more preferably 3 to 30 parts by mass, and particularly preferably 5 to 20 parts by mass. The content of curing agent C less than 1 part by mass makes it difficult to impart fast curability to the obtained epoxy resin composition, which is not preferable. In contrast, the content more than 43 parts by mass causes the excessively enhanced reactivity of the obtained epoxy resin composition, and the extremely shortened pot life during RTM molding, which is not preferable. This case makes it difficult to impregnate a sufficient amount of resin inside the reinforcing fiber base material, and the fiber-reinforced composite material produced using such an epoxy resin composition will contain many defects such as voids, resulting in reduction of the compression performance and damage tolerance of the fiber reinforced composite structure.

### [Content of curing agent composition]

In the curing agent composition for thermosetting resin of the present invention, the total mass of curing agent A, curing agent B, and curing agent C is preferably 70 to 100 mass%, and more preferably 80 to 100 mass% with respect to the total mass of the curing agent composition for thermosetting resin. The total amount of less than 70 mass% may result in insufficient heat resistance to the cured product, which is not preferable.

### [Other components]

The curing agent composition for thermosetting resin of the present invention may further contain other curing agents and other components within the range satisfying the above conditions. For example, there may be contained conductive particles, flame retardants, inorganic fillers, and internal mold release agents.

Examples of the conductive particles include conductive polymer particles such as polyacetylene particles, polyaniline particles, polypyrrole particles, polythiophene particles, polyisothianaphthene particles, and polyethylenedioxythiophene particles; carbon particles; carbon fiber particles; metal particles; and particles of a conductive substance-coated core material composed of inorganic or organic material.

Examples of flame retardants include a phosphorus-based flame retardant. The phosphorus-based flame retardant may be any flame retardant as long as it contains a phosphorus atom in the molecule, and examples thereof include organic phosphorus compounds such as phosphates, condensed phosphates, phosphazene compounds and polyphosphates, and red phosphorus.

Examples of inorganic fillers include aluminum borate, calcium carbonate, silicon carbonate, silicon nitride, potassium titanate, basic magnesium sulfate, zinc oxide, graphite, calcium sulfate, magnesium borate, magnesium oxide, and silicate minerals. In particular, silicate minerals are preferably used. Examples of commercially available silicate minerals include THIXOTROPIC AGENT DT 5039 (manufactured by Huntsman Japan KK).

Examples of internal release agents include metallic soaps, vegetable waxes such as polyethylene wax and carnauba wax, fatty acid ester release agents, silicone oils, animal waxes, and fluorine-based nonionic surfactants.

Examples of commercially available internal release agents include MOLD WIZ (registered trademark), INT1846 (manufactured by AXEL PLASTICS RESEARCH LABORATORIES INC.), Licowax S, Licowax P, Licowax OP, Licowax PE190, Licowax PED (manufactured by Clariant Japan K.K.), and stearyl stearate (SL-900A; manufactured by Riken Vitamin Co., Ltd.).

### [Method for producing curing agent composition for thermosetting resin]

The curing agent composition for thermosetting resin of the present invention can be produced by mixing the curing agent A, the curing agent B, the curing agent C, and, if necessary, other components. The order of mixing does not matter.

The temperature of the composition for thermosetting resin during mixing is preferably 50 to 200°C, more preferably 50 to 150°C, and particularly preferably 80 to 120°C. The temperature higher than 200°C may cause the added components to thermally decompose, which is not preferable. In contrast, the temperature lower than 50°C leaves the solid curing agents A and C unmelted and hardly soluble to the curing agent B, making it difficult to obtain a liquid state of the curing agent composition for thermosetting resin, which is not preferable.

Examples of the device used for mixing the curing agent include roll mills, planetary mixers, kneaders, extruders, Banbury mixers, mixing vessels equipped with stirring blades, and horizontal mixing tanks. The mixing may be performed in the air or in an inert gas atmosphere.

Mixing in the air is preferably performed in an atmosphere with controlled temperature and humidity. In this case, the mixing is preferably performed, for example, at a constantly controlled temperature of 30°C or lower, or in a low humidity atmosphere with a relative humidity of 50% or lower.

### [Epoxy resin composition]

The epoxy resin composition of the present invention contains the curing agent composition for thermosetting resin of the present invention described above and an epoxy base resin.

The epoxy base resin contains the following epoxy resin D and epoxy resin E. The epoxy base resin may further contain other optional components. The content of the epoxy resin in the epoxy base resin is, with respect to the total mass of the epoxy base resin, preferably 30 to 100 mass%, and more preferably 50 to 100 mass%.

### [Epoxy resin D]

Epoxy resin D is an epoxy resin composed of a monomer containing 4 or more glycidyl groups. The epoxy resin D may be a homopolymer composed of one type of monomer, a copolymer composed of two or more types of monomers, or a mixture of homopolymers and/or copolymers.

A constituent monomer, which composes the epoxy resin D, contains 4 or more glycidyl groups, and is preferably represented by the following chemical formula (13). 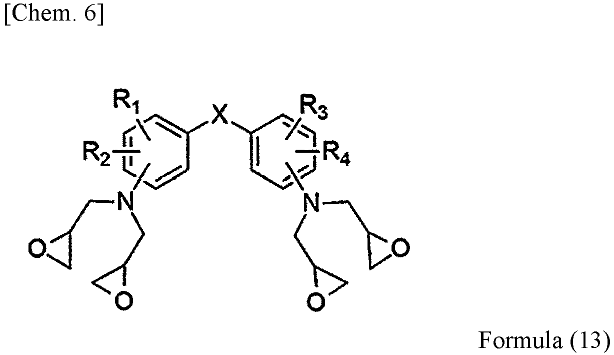 (In the chemical formula (13), R₁ to R₄ each independently represent one selected from the group consisting of a hydrogen atom, an aliphatic hydrocarbon group, an alicyclic hydrocarbon group, and a halogen atom, and X represents one selected from the group consisting of -CH₂-, -O-, -S-, -CO-, -C(=O)O-, -O-C(=O)-, -NHCO-, -CONH-, and - SOz-.)

R₁ to R₄ each, when being an aliphatic hydrocarbon group or alicyclic hydrocarbon group, preferably have 1 to 4 carbon atoms.

Constituent monomers of the epoxy resin D are particularly preferably one or a combination of two or more selected from the group consisting of tetraglycidyl-4,4'-diaminodiphenyl ether, tetraglycidyl-4,4'-diaminodiphenyl methane, tetraglycidyl-3,4'-diaminodiphenyl ether, and tetraglycidyl-3,3'-diaminodiphenylmethane.

The epoxy resin D is preferably a homopolymer or copolymer composed of these monomers, or a mixture thereof. R₁ to R₄ are preferably hydrogen atoms because formation of a specific steric structure in the resin cured product is less likely to be hindered. In addition, X is preferably -O- because it facilitates the synthesis of the compound.

Constituent monomers of the epoxy resin D may be synthesized by any method. For example, the constituent monomer can be obtained by reacting raw materials of aromatic diamine and epihalohydrin such as epichlorohydrin preferably in the presence of an acid catalyst to obtain a tetrahalohydrin body, followed by a cyclization reaction using an alkaline compound. Specifically, synthesis can be performed by the method described in Examples below.

Examples of the aromatic diamines include 4,4'-diaminodiphenyl ether, 3,3'-diaminodiphenyl ether, 3,4'-diaminodiphenyl ether, 4,4'-diaminodiphenyl sulfone, 3,3'-diaminodiphenyl sulfone, 3,4'-diaminodiphenyl sulfone, and 4,4'-diaminodiphenyl methane.

Among these, from the viewpoint of heat resistance, aromatic diamines are preferable in which two aromatic rings having amino groups are linked by an ether linkage, and more preferably, one amino group is at a para position to the ether linkage, and the other amino group is at an ortho position. Examples of such aromatic diamines include 3,4'-diaminodiphenyl ether and 3,4'-diaminodiphenyl sulfone.

Examples of epihalohydrin include epichlorohydrin, epibromohydrin, and epifluorohydrin. Among them, epichlorohydrin and epibromohydrin are particularly preferable from the viewpoint of reactivity and handleability.

The mass ratio of the raw materials of aromatic diamine to epihalohydrin is preferably 1:1 to 1:20, and more preferably 1:3 to 1:10.

Examples of the solvents used in the reaction include alcohol solvents such as ethanol and n-butanol, ketone solvents such as methyl isobutyl ketone and methyl ethyl ketone, aprotic polar solvents such as acetonitrile and N,N-dimethylformamide, and aromatic hydrocarbon solvents such as toluene and xylene. Alcohol solvents such as ethanol and n-butanol, and aromatic hydrocarbon solvents such as toluene and xylene are particularly preferable.

The amount of the solvent to be used is preferably 1 to 10 mass times of the aromatic diamine. Acid catalysts of Bronsted acids and Lewis acids both can be suitably used. Bronsted acids are preferably ethanol, water and acetic acid, and Lewis acids are preferably titanium tetrachloride, lanthanum nitrate hexahydrate, and boron trifluoride diethyl ether complex.

The reaction time is preferably 0.1 to 180 hours, and more preferably 0.5 to 24 hours. The reaction temperature is preferably 20 to 100°C, and more preferably 40 to 80°C.

Examples of alkaline compounds used in the cyclization reaction include sodium hydroxide and potassium hydroxide. The alkaline compound may be added as a solid or as an aqueous solution.

A phase transfer catalyst may be used during the cyclization reaction. Examples of phase transfer catalysts includes quaternary ammonium salts such as tetramethylammonium chloride, tetraethylammonium bromide, benzyltriethylammonium chloride, and tetrabutylammonium hydrogen sulfate; phosphonium compounds such as tributylhexadecylphosphonium bromide and tributyldodecylphosphonium bromide; and crown ethers such as 18-crown-6-ether.

### [Epoxy resin E]

Epoxy resin E is an epoxy resin composed of a monomer containing 2 or 3 glycidyl groups. Containing the epoxy resin E can reduce the viscosity of the epoxy resin composition and improve impregnatability of the resin into the reinforcing fiber base material, extend the pot life, and thus can increase the degree of freedom in designing the mold used in the RTM method.

Combination use of the epoxy resin E and the epoxy resin D makes it possible to improve impregnatability of the resin into the reinforcing fiber base material, and to obtain a resin cured product and a fiber-reinforced composite material that maintain heat resistance and a high elastic modulus.

As a constituent monomer of the epoxy resin E, a monomer having two or three glycidyl groups is used. It is preferably an aromatic compound.

As monomers having two glycidyl groups, preferably used are diglycidylaniline and its derivatives of diglycidyl-o-toluidine, diglycidyl-m-toluidine, diglycidyl-p-toluidine, diglycidyl-xylidine, diglycidyl-mesidine, diglycidyl-anisidine, diglycidyl-phenoxy aniline, diglycidyl-naphthylamine, and bisphenol A diglycidyl ether and its derivatives.

In particular, more preferably used are diglycidyl-aniline, diglycidyl-o-toluidine, diglycidyl-m-toluidine, diglycidyl-p-toluidine, diglycidyl-phenoxy aniline, and bisphenol A diglycidyl ether, and further preferably used is diglycidyl-aniline or diglycidyl-o-toluidine.

The epoxy resin composed of a monomer containing two or three glycidyl groups is preferably an epoxy resin having a polycyclic aromatic hydrocarbon skeleton.

Examples of polycyclic aromatic hydrocarbon skeletons include naphthalene skeletons and anthracene skeletons, and naphthalene skeletons are preferable from the viewpoint of physical properties of resin cured product.

The polycyclic aromatic hydrocarbon group may have, in addition to a glycidyl group, a substituent other than the glycidyl group. Examples of monomers having a naphthalene skeleton include 1,6-bis(glycidyloxy)naphthalene, 1,5-bis(glycidyloxy)naphthalene, 2,6-bis(glycidyloxy)naphthalene, 2,7-bis(glycidyloxy)naphthalene, 2,2'-bis(glycidyloxy)-1,1'-binaphthalene, and 2,7-bis(glycidyloxy)-1-[2-(glycidyloxy)-1-naphthylmethyl]naphthalene.

Use of an epoxy resin containing these compounds as constituent monomers makes it possible to reduce the viscosity of the epoxy resin composition and improve the heat resistance of the resin cured product.

Use of an epoxy resin having a polycyclic aromatic hydrocarbon skeleton as the epoxy resin composed of a monomer containing two or three glycidyl groups does not allow excessive increase in the crosslink density of the cured product, and thus can prevent deterioration of the toughness of the resin cured product, which is preferable.

Among epoxy resins composed of monomers containing two or three glycidyl groups, constituent monomers of the epoxy resin E are preferably aromatic compounds having three glycidyl groups. The epoxy resin is preferably a triglycidylaminophenol derivative epoxy resin.

Examples of triglycidylaminophenol derivative epoxy resins include triglycidyl-m-aminophenol and triglycidyl-p-aminophenol. Containing this epoxy resin E enables the epoxy resin composition to reduce the viscosity, and the resin cured product to improve the heat resistance.

Among epoxy resins composed of monomers containing two or three glycidyl groups, constituent monomers of the epoxy resin E are also preferably heteroaromatic compounds having three glycidyl groups. That is, the epoxy resin E also preferably contains a triglycidyl isocyanurate derivative epoxy resin.

Examples of triglycidyl isocyanurate derivative epoxy resins include 1,3,5-triglycidyl isocyanurate, 1,3,5-tri(ethylglycidyl) isocyanurate, and 1,3,5-tri(pentylglycidyl) isocyanurate.

Containing these enables the epoxy resin cured product to improve the heat resistance and elastic modulus. Therefore, use of the epoxy resin E in combination with the epoxy resin D makes it possible to obtain a resin cured product and a fiber-reinforced composite material that maintain heat resistance and a high elastic modulus.

Constituent monomers of the epoxy resin E are particularly preferably one or a combination of two or more selected from diglycidylaniline, diglycidyl-o-toluidine, triglycidyl-p-aminophenol, triglycidyl-m-aminophenol, 1,6-bis(2,3-epoxypropan-1-yloxy)naphthalene, 1,3,5-triglycidyl isocyanurate, and bisphenol A diglycidyl ether.

The epoxy resin E is particularly preferably a homopolymer and a copolymer composed of these monomers, and a mixture thereof.

Other examples of the epoxy resin E include bisphenol F type epoxy resin, and bisphenol S type epoxy resin, phenol novolak type epoxy resin, and cresol novolak type epoxy resin.

### [Resin particles F]

The epoxy resin composition of the present invention preferably contains resin particles F. In this case, the resin particles F are undissolved and dispersed in the epoxy resin composition, and, even in the resin cured product after the epoxy resin composition is cured, are present as a dispersed state in the resin cured product. When the resin cured product is present as a sea component, the resin particles F are present as an island component in the resin cured product.

Containing the resin particles F can impart high fracture toughness and impact resistance to the resin cured product and the fiber-reinforced composite material.

As resin particles F, for example, thermoplastic resin particles, thermosetting resin particles, and rubber particles can be used, and rubber particles are preferably used. Examples of rubber particles include silicone rubber, butadiene rubber, styrene-butadiene rubber, and methyl methacrylate-butadiene-styrene rubber.

Examples of commercially available rubber particles used as the resin particles F include MX-153 (bisphenol A type epoxy resin with 33 mass% of butadiene rubber monodispersed, manufactured by Kaneka Corporation), MX-257 (bisphenol A type epoxy resin with 37 mass% of butadiene rubber monodispersed, manufactured by Kaneka Corporation), MX-154 (bisphenol A type epoxy resin with 40 mass% of butadiene rubber monodispersed, manufactured by Kaneka Corporation), MX-960 (bisphenol A type epoxy resin with 25 mass% of silicone rubber monodispersed, manufactured by Kaneka Corporation), MX-136 (bisphenol F type epoxy resin with 25 mass% butadiene rubber monodispersed, manufactured by Kaneka Corporation), MX-965 (bisphenol F type epoxy resin with 25 mass% of silicone rubber monodispersed, manufactured by Kaneka Corporation), MX- 217 (phenol novolak type epoxy resin with 25 mass% of butadiene rubber monodispersed, manufactured by Kaneka Corporation), MX-227M75 (bisphenol A novolak type epoxy resin with 25 mass% of styrene butadiene rubber monodispersed, manufactured by Kaneka Corporation), MX-334M75 (brominated epoxy resin with 25 mass% of styrene-butadiene rubber monodispersed, manufactured by Kaneka Corporation), MX-416 (tetrafunctional glycidylamine type epoxy resin with 25 mass% of butadiene rubber monodispersed, manufactured by Kaneka Corporation), and MX-451 (trifunctional glycidylamine type epoxy resin with 25 mass% of styrene-butadiene rubber monodispersed, manufactured by Kaneka Corporation).

The resin particles F have an average particle size of preferably 1.0 µm or less, more preferably 0.5 µm or less, and particularly preferably 0.3 µm or less. The average particle size is preferably 0.03 µm or more, more preferably 0.05 µm or more, and particularly preferably 0.08 µm or more.

The average particle size is a value measured and calculated by the following method. The cross section of the resin cured product is observed at a magnification of 25000 times with a scanning electron microscope or transmission electron microscope, and the diameters of at least 50 or more particles are measured as resin particle sizes, which are averaged to obtain the average particle size. In the above observation, when the particle is not perfectly circular, that is, when the particle is elliptical, the maximum diameter of the particle is regarded as the particle size of the particle.

The average particle size of 1 µm or less can prevent the resin particles F from being filtered out on the surface of the reinforcing fiber base material in the step of impregnating the epoxy resin composition into the reinforcing fiber base material, and facilitates impregnation into the reinforcing fiber bundle. Accordingly, poor impregnation of the resin can be prevented, and a fiber-reinforced composite material having excellent physical properties can be obtained.

The resin particles F are also dispersed at a high concentration in an epoxy resin, which can be used as a masterbatch. This case facilitates high dispersion of the resin particles F in the epoxy resin composition.

### [Composition ratio of epoxy base resin]

In the epoxy resin composition of the present invention, the ratio of the epoxy resin D to the total amount of the epoxy resin (epoxy base resin) is preferably 50 to 90 mass%, and particularly preferably 60 to 80 mass%. The ratio of the epoxy resin D of 50 mass% or more can further improve the heat resistance and elastic modulus of the obtained resin cured product. As a result, various mechanical properties of the obtained fiber-reinforced composite material are also improved.

In the epoxy resin composition of the present invention, the content of the epoxy resin E is, with respect to the total mass of the epoxy resin (epoxy base resin), preferably 10 to 50 mass%, and more preferably 20 to 40 mass%. Setting the content of the epoxy resin E within this range with respect to the total mass of the epoxy resin makes it possible to produce an epoxy resin composition having a viscosity and pot life suitable for the RTM method and having high heat resistance.

### [Composition ratio of epoxy resin composition]

The total amount of the curing agent composition for thermosetting resin contained in the epoxy resin composition is an amount suitable for curing all the epoxy resins blended in the epoxy resin composition, and is adjusted appropriately depending on the type of epoxy resin and curing agent for thermosetting resin for use.

Specifically, the ratio of the total number of epoxy groups of the epoxy resin in the epoxy resin composition and the number of active hydrogens contained in the curing agent composition for thermosetting resin is preferably 0.7 to 1.3, more preferably 0.8 to 1.2, and particularly preferably 0.9 to 1.1. The ratio of the number of active hydrogens less than 0.7 or more than 1.3 will disturb the molar balance between the epoxy groups and the active hydrogens, and will cause insufficient cross-linking density in the obtained resin cured product, resulting in decrease in heat resistance and mechanical properties such as elastic modulus and fracture toughness, which is not preferable.

In the epoxy resin composition of the present invention, the content of the resin particles F is, with respect to the total amount of the epoxy resin composition, preferably 0.1 to 50 mass%, more preferably 0.5 to 20 mass%, and particularly preferably 1 to 15 mass%. Setting the content to 0.1 mass% or more can sufficiently improve the fracture toughness and impact resistance of the resin cured product and fiber composite material.

### [Other optional components]

The epoxy resin composition of the present invention may contain a curing agent other than curing agent A, curing agent B, or curing agent C, also may contain an epoxy resin other than epoxy resin D or epoxy resin E, and a thermosetting resin other than epoxy resin, and also may contain a thermoplastic resin other than resin particles F, and other additives.

Examples of the curing agent other than curing agent A, curing agent B, or curing agent C include aliphatic polyamines, various isomers of aromatic amine curing agents, aminobenzoates, and acid anhydrides.

Examples of the aliphatic polyamine include 4,4'-diaminodicyclohexylmethane, isophoronediamine, and m-xylylenediamine.

Examples of the aminobenzoate include trimethylene glycol di-p-aminobenzoate and neopentyl glycol di-p-aminobenzoate. Cured products and fiber-reinforced composite materials cured using these curing agents have high tensile elongation.

Examples of the acid anhydride include 1,2,3,6-tetrahydrophthalic anhydride, hexahydrophthalic anhydride, and 4-methylhexahydrophthalic anhydride. Use of these curing agents allows an uncured resin composition to have a long pot life, and makes it possible to obtain a cured product relatively well-balanced among electrical properties, chemical properties, mechanical properties, and the like.

As the epoxy resin other than epoxy resin D or epoxy resin E, for example, a monofunctional epoxy resin can be used. Among these, preferably used is an epoxy resin containing an aromatic group, and more preferably used is an epoxy resin containing a glycidyl amine structure or a glycidyl ether structure. Alicyclic epoxy resins can also be suitably used.

These epoxy resins may have a non-reactive substituent in the aromatic ring structure or the like, if necessary. Examples of the non-reactive substituent include alkyl group such as methyl, ethyl, and isopropyl; aromatic group such as phenyl; alkoxyl group; aralkyl group; and halogen group such as chlorine and bromine.

Examples of the thermosetting resin other than epoxy resin include vinyl ester resin, benzoxazine resin, bismaleimide resin, and bismaleimide-triazine resin.

The epoxy resin composition of the present invention may contain, in addition to the resin particles F, a thermoplastic resin as a component to be dissolved in the epoxy resin composition. The thermoplastic resin improves the fracture toughness and impact resistance of the obtained fiber-reinforced composite material. Such thermoplastic resins may be dissolved in the epoxy resin composition during the curing process of the epoxy resin composition.

Examples of thermoplastic resins include polyethersulfone, polysulfone, polyetherimide, and polycarbonate. These may be used alone or in combination of two or more.

The thermoplastic resin is particularly preferably polyethersulfone or polysulfone having a weight average molecular weight (Mw) in the range of 8000 to 100000 as measured by gel permeation chromatography. The weight average molecular weight (Mw) of 8000 or more imparts sufficient impact resistance to the obtained FRP, and that of 100000 or less does not give significantly increased viscosity and thus makes it possible to obtain the epoxy resin composition exhibiting good handleability.

The thermoplastic resin preferably has a uniform molecular weight distribution, and the polydispersity (Mw/Mn), the ratio of the weight average molecular weight (Mw) to the number average molecular weight (Mn), is preferably 1 to 10, and more preferably 1.1 to 5.

The thermoplastic resin preferably has a reactive group having reactivity with the epoxy resin or a functional group forming a hydrogen bond with the epoxy resin. Such thermoplastic resins can improve the dissolution stability of the epoxy resin during the curing process. In addition, fracture toughness, chemical resistance, heat resistance, and wet heat resistance can be imparted to the fiber-reinforced composite material obtained after curing.

The reactive groups having reactivity with the epoxy resin are preferably a hydroxy group, a carboxylic acid group, an imino group, an amino group, and the like. Hydroxy-terminated polyethersulfone is more preferably used due to the particularly excellent impact resistance, fracture toughness and solvent resistance of the obtained fiber-reinforced composite material.

The content of the thermoplastic resin contained in the epoxy resin composition is appropriately adjusted depending on the viscosity. The thermoplastic resin is, when contained, from the viewpoint of impregnation into the fiber reinforcing base material, preferably 0.1 to 10 parts by mass, and more preferably 0.5 to 5 parts by mass with respect to 100 parts by mass of the epoxy resin contained in the epoxy resin composition. Containing the amount of 0.1 parts by mass or more allows the obtained fiber-reinforced composite material to exhibit sufficient fracture toughness and impact resistance. The thermoplastic resin content of 10 parts by mass or less does not give significantly increased viscosity to the epoxy resin composition, which facilitates impregnation into the fiber reinforcing base material, and thus improves the properties of the obtained fiber-reinforced composite material.

Thermoplastic resins preferably contain reactive aromatic oligomers having amine end groups (hereinafter also simply referred to as "aromatic oligomer").

The epoxy resin composition becomes high molecular weight due to a curing reaction between the epoxy resin and the curing agent during heat curing. The expansion of a two-phase region due to the increased molecular weight causes reaction-induced phase separation by the aromatic oligomer dissolved in the epoxy resin composition. The phase separation causes a two-phase resin structure, in which the cured epoxy resin and the aromatic oligomer are bicontinuous, to be formed in the matrix resin.

In addition, having amine end groups, the aromatic oligomers also react with epoxy resins. Since each phase in this bicontinuous two-phase structure is strongly bonded to each other, solvent resistance is also improved.

The bicontinuous structure absorbs external impact on the fiber-reinforced composite material and suppresses crack propagation. As a result, fiber-reinforced composite material produced using epoxy resin compositions containing reactive aromatic oligomers having amine end groups has high impact resistance and fracture toughness.

As the aromatic oligomer, known polysulfones having amine end groups and polyether sulfones having amine end groups can be used. The amine end groups are preferably primary amine (-NH₂) end groups.

The aromatic oligomer, when blended into the epoxy resin composition, preferably has a weight average molecular weight of 8000 to 40000 as measured by gel permeation chromatography. The weight average molecular weight of 8000 or more is highly effective for improving the toughness of the matrix resin. In addition, weight average molecular weight of 40000 or less does not yield excessively increased viscosity to the resin composition, and thus gives processing advantages such as facilitating impregnation of the resin composition into the reinforcing fiber base material.

Aromatic oligomers of commercially available products such as "Virantage DAMS VW-30500 RP (registered trademark)" (manufactured by Solvay Specialty Polymers) can be preferably used.

The form of the thermoplastic resin is preferably particulate before blending into the epoxy resin composition. The particulate form of thermoplastic resin can be uniformly blended and dissolved in the resin composition.

The epoxy resin composition of the present invention may contain other additives such as conductive particles, flame retardants, inorganic fillers, and internal mold release agents.

Examples of the conductive particles include conductive polymer particles such as polyacetylene particles, polyaniline particles, polypyrrole particles, polythiophene particles, polyisothianaphthene particles, and polyethylenedioxythiophene particles; carbon particles; carbon fiber particles; metal particles; and particles of a conductive substance-coated core material composed of inorganic or organic material.

Examples of flame retardants include a phosphorus-based flame retardant. The phosphorus-based flame retardant may be any flame retardant as long as it contains a phosphorus atom in the molecule, and examples thereof include organic phosphorus compounds such as phosphates, condensed phosphates, phosphazene compounds and polyphosphates, and red phosphorus.

Examples of the inorganic filler include aluminum borate, calcium carbonate, silicon carbonate, silicon nitride, potassium titanate, basic magnesium sulfate, zinc oxide, graphite, calcium sulfate, magnesium borate, magnesium oxide, and silicate minerals. In particular, silicate minerals are preferably used. Examples of commercially available silicate minerals include THIXOTROPIC AGENT DT 5039 (manufactured by Huntsman Japan KK).

Examples of the internal release agent include metallic soaps, vegetable waxes such as polyethylene wax and carnauba wax, fatty acid ester release agents, silicone oils, animal waxes, and fluorine-based nonionic surfactants. These internal mold release agents are preferably blended at a blending amount of 0.1 to 5 parts by mass with respect to 100 parts by mass of the epoxy resin, and more preferably 0.2 to 2 parts by mass. Blending within this range enables suitable exhibition of the release effect from the mold.

Examples of commercially available internal release agents include "MOLD WIZ (registered trademark)", INT1846 (manufactured by AXEL PLASTICS RESEARCH LABORATORIES INC.), Licowax S, Licowax P, Licowax OP, Licowax PE190, Licowax PED (manufactured by Clariant Japan K.K.), and stearyl stearate (SL-900A; manufactured by Riken Vitamin Co., Ltd.).

### [Properties of epoxy resin composition]

The epoxy resin composition of the present invention can have the following properties.

The epoxy resin composition has an initial viscosity at 100°C or 120°C of preferably 300 mPa·s or less, more preferably 0.1 to 100 mPa·s, further preferably 0.5 to 50 mPa s, further preferably 0.5 to 30 mPa s, and particularly preferably 0.5 to 20 mPa s. The initial viscosity at 100°C or 120°C of 300 mPa s or less can facilitate impregnation of the epoxy resin composition into the reinforcing fiber base material, and thus can prevent the obtained fiber-reinforced composite material from forming voids that cause deterioration of the physical properties.

The relationship between viscosity and impregnatability also depends on the composition of the reinforcing fiber base material. The initial viscosity at 100°C or 120°C exceeding 300 mPa·s makes it difficult to impregnate the epoxy resin composition into the reinforcing fiber base material, which is not preferable. In this case, voids etc. are likely to be formed in the obtained fiber-reinforced composite material, causing deterioration in physical properties. The relationship between viscosity and impregnatability depends also on the composition of the reinforcing fiber base material, and impregnation into the reinforcing fiber base material may be good even at a viscosity outside the above range.

In addition, a pot life of the epoxy resin composition varies depending on the molding conditions of the composite material, and, for example, when impregnating an epoxy resin composition into a fiber base material for a large composite material at a relatively low impregnation pressure by a resin transfer molding method (RTM method), the pot life of time until the viscosity exceeds 50 mPa·s at holding temperature of 100°C is preferably 20 minutes or more, more preferably 40 minutes or more, further preferably 60 minutes or more, further preferably 90 minutes or more, further preferably 100 minutes or more, further preferably 120 minutes or more, further preferably 180 minutes or more, and particularly preferably 300 minutes or more. Further, the pot life of time until the viscosity exceeds 50 mPa·s at holding temperature of 120°C, is preferably 20 minutes or more, more preferably 40 minutes or more, and further preferably 60 minutes or more. The pot life of 20 minutes or more allows the stable use in the impregnation step.

### [Method for producing epoxy resin composition]

The epoxy resin composition of the present invention can be produced by mixing the epoxy base resin liquid and the curing agent liquid. Here, the curing agent liquid contains the above-mentioned curing agent A, curing agent B, and curing agent C. Further, the epoxy base resin liquid contains the above-mentioned epoxy resin D and epoxy resin E.

When resin particles F is contained in the epoxy resin composition, the resin particles F can be contained in the curing agent liquid and/or the epoxy base resin liquid.

The epoxy resin composition may be in a one-liquid state with each component mixed uniformly, or in a slurry state with a part of component in solid form, other components in liquid form, and the former dispersed in the latter.

The epoxy resin composition of the present invention can be produced by using a conventionally known method. The mixing temperature, that is, a temperature for mixing each component is, for example, 40 to 180°C, preferably 50 to 160°C, and more preferably 50 to 120°C. The temperature higher than 180°C may cause immediate progress of the curing reaction, which results in a decrease in the impregnatability into the reinforcing fiber base material, and may reduce the physical properties of the cured product. The temperature lower than 40°C may result in high viscosity of the epoxy base resin, which may substantially make the mixing difficult.

A conventionally known mechanical device can be used for mixing each component, and examples thereof include roll mills, planetary mixers, kneaders, extruders, Banbury mixers, mixing vessels equipped with stirring blades, and horizontal mixing tanks.

Each component can be mixed in the air or under an inert gas atmosphere. Mixing in the air is preferably performed in an atmosphere with controlled temperature and humidity. The atmosphere is preferably at a constantly controlled temperature of 30°C or less and a relative humidity of 50% RH or less.

### [Epoxy base resin liquid]

The epoxy base resin liquid contains an epoxy resin, which is preferably epoxy resin D and epoxy resin E. The epoxy base resin preferably further contains resin particles F. The epoxy base resin may contain other optional components in addition to those mentioned above.

The content of the epoxy resin in the epoxy base resin liquid is, with respect to the total mass of the epoxy base resin, preferably 30 to 100 mass%, and more preferably 50 to 100 mass%.

### [Method for producing epoxy base resin liquid]

The epoxy base resin liquid can be preferably produced by mixing epoxy resin D and epoxy resin E, and, if necessary, resin particles F and other optional components. The order of mixing does not matter.

The epoxy base resin liquid may be in a one-liquid state with each component mixed uniformly, or in a slurry state with a part of component in solid form, other components in liquid form, and the former dispersed in the latter.

Any conventionally known method may be used to produce the epoxy base resin liquid. The mixing temperature is, for example, 40 to 200°C, preferably 50 to 100°C, and more preferably 50 to 90°C. The temperature higher than 200°C may cause partial progress of the self-polymerization reaction in the epoxy resin, which results in a decrease in the impregnatability into the reinforcing fiber base material, and may reduce the physical properties of the cured product produced using the obtained epoxy base resin liquid. The temperature lower than 40°C may result in high viscosity of the epoxy base resin, which may substantially make the mixing difficult.

Conventionally known devices can be used for the mechanical mixing device. Specific examples thereof include roll mills, planetary mixers, kneaders, extruders, Banbury mixers, mixing vessels equipped with stirring blades, and horizontal mixing tanks.

Each component can be mixed in the air or under an inert gas atmosphere. Mixing in the air is preferably performed in an atmosphere with controlled temperature and humidity. For example, the mixing is preferably performed at a constantly controlled temperature of 30°C or lower, and in a low humidity atmosphere with a relative humidity of 50% RH or lower.

### [Curing agent liquid]

The curing agent liquid is prepared by mixing curing agent A, curing agent B, and curing agent C. Then, resin particles F and other optional components may be added, as necessary.

The curing agent liquid is a liquid composition containing curing agent A, curing agent B, and curing agent C. The curing agent liquid may be in a one-liquid state with each component mixed uniformly, or in a slurry state with a part of component in solid form, other components in liquid form, and the former dispersed in the latter.

### [Method for producing curing agent liquid]

The curing agent liquid can be produced by mixing curing agent A, curing agent B, and curing agent C. In this case, a conventionally known method can be used. The temperature for mixing each component is, for example, 50 to 200°C, preferably 50 to 150°C, and more preferably 80 to 120°C. The temperature higher than 200°C may cause the added components to thermally decompose. In contrast, the temperature lower than 50°C leaves solid of the curing agent A and curing agent C unmelted and unlikely to melt into the curing agent B, making it difficult to obtain a curing agent liquid in a liquid state.

The curing agent liquid can be produced using the same production equipment as the above-mentioned epoxy base resin liquid under the same conditions.

### [Resin cured product]

A resin cured product can be obtained by curing the epoxy resin composition of the present invention. The obtained resin cured product can have the following preferred properties.

The resin cured product has a cure degree of preferably 70% or more, more preferably 80% or more, and particularly preferably 90% or more. The cure degree within this range enables the production of the fiber-reinforced composite material with high productivity. The cure degree is a degree of cure of the resin cured product after heating the epoxy resin composition at 180°C for 40 minutes, as evaluated by dielectric cure measurement.

The glass transition temperature in a dry state (dry-Tg) of the resin cured product is preferably 140°C or higher, more preferably 170°C or higher, and particularly preferably 180°C or higher, from the viewpoint of the heat resistance of the resulting fiber-reinforced composite material.

The glass transition temperature at saturated water absorption (wet-Tg) of the resin cured product is preferably 120°C or higher, and more preferably 150 to 200°C, from the viewpoint of the heat resistance of the resulting fiber-reinforced composite material.

The resin cured product has a room temperature dry flexural modulus (RTD-FM) of preferably 3.0 GPa or higher, more preferably 3.3 to 10.0 GPa, and further preferably 3.5 to 9.0 GPa, as measured by JIS K7171 method. The elastic modulus of 3.0 GPa or more will impart excellent mechanical properties to the fiber-reinforced composite material obtained using the epoxy resin composition of the present invention. In contrast, the flexural modulus of lower than 3.0 GPa tends to lower the properties of the fiber-reinforced composite material obtained using the epoxy resin composition, which is not preferable.

The resin cured product has a deformation mode I critical stress intensity factor KIc measured in accordance with ASTM D5045 of preferably 0.7 MPa·m^{1/2} or more, more preferably 0.8 MPa·m^{1/2} or more, further preferably 0.85 MPa·m^{1/2} or more, and particularly preferably 0.9 MPa·m^{1/2} or more. The KIc lower than 0.7 MPa·m^{1/2} tends to lower the properties of the fiber-reinforced composite material obtained using the epoxy resin composition, which is not preferable. The higher the KIc is, the more preferable, and the upper limit is, for example, 3.0 MPa·m^{1/2}.

### [Fiber-reinforced composite material]

The fiber-reinforced composite material can be obtained by compositing and curing a fiber reinforcing base material and the epoxy resin composition of the present invention.

Examples of fibers for the reinforcing fiber base material include carbon fiber, glass fiber, aramid fiber, silicon carbide fiber, polyester fiber, ceramic fiber, alumina fiber, boron fiber, metal fiber, mineral fiber, rock fiber, and slag fiber.

Among these reinforcing fibers, carbon fiber, glass fiber, and aramid fiber are preferred. Carbon fiber has good specific tensile strength and specific modulus, and provides a lightweight and high-strength fiber-reinforced composite material, and is thus more preferable. Among carbon fibers, polyacrylonitrile (PAN)-based carbon fiber is particularly preferable due to the excellent tensile strength.

PAN-based carbon fiber, when used as the reinforcing fiber, preferably has a tensile modulus of 100 to 600 GPa, more preferably 200 to 500 GPa, and more preferably 230 to 450 GPa.

PAN-based carbon fiber, when used as the reinforcing fiber, preferably has a tensile strength of preferably 2000 to 10000 MPa, and more preferably 3000 to 8000 MPa.

Carbon fiber, when used as reinforcing fiber, preferably has a diameter of 4 to 20 µm, and more preferably 5 to 10 µm. Use of carbon fiber having the above diameter enables the obtained fiber-reinforced composite material to improve the mechanical properties, which is preferable.

In the present invention, the reinforcing fibers are preferably treated with a sizing agent. In this case, the attached amount of the sizing agent, with respect to the mass of the sizing agent-attached reinforcing fiber, is preferably 0.01 to 10 mass%, more preferably 0.05 to 3.0 mass%, and more preferably 0.1 to 2.0 mass%. The attached amount of the sizing agent within this range enables compatibleness of the adhesion between the reinforcing fibers and the matrix resin and the interlaminar toughness of the resulting composite material, which is preferable. The more the sizing agent is attached, the stronger the adhesion between the reinforcing fiber and the matrix resin tends to be. The less the sizing agent is attached, the more excellent interlaminar toughness the obtained composite material tends to exhibit.

A reinforcing fiber sheet is preferably used as the fiber reinforcing base material. This is obtained by forming the reinforcing fibers into a sheet. Examples of the reinforcing fiber sheet include a unidirectionally drawn and aligned sheet, bidirectional fabrics such as plain fabrics and twill fabrics, multiaxial fabrics, nonwoven fabrics, mats, knits, braids, and paper made by papermaking of reinforcing fibers.

From the viewpoint of obtaining a fiber-reinforced composite material having excellent mechanical properties, preferably used is a unidirectionally drawn and aligned sheet, a bidirectional woven fabric, or a multiaxial woven fabric. The unidirectionally drawn and aligned sheet is a sheet in which a large number of reinforcing fibers are drawn and aligned in one direction.

The base material of bidirectional fabric or multiaxial fabric may be prepared by laminating and stitching a plurality of unidirectionally drawn and aligned sheets. In this case, from the viewpoint of improving the interlaminar toughness of the obtained fiber-reinforced composite material, the fabric may be prepared by arranging a thermoplastic resin nonwoven fabric on one side of the unidirectionally drawn and aligned sheet and then laminating it.

Examples of the thermoplastic resin of the thermoplastic resin nonwoven fabric include polyester resin fibers, polyamide resin fibers, polyethersulfone resin fibers, polysulfone resin fibers, polyetherimide resin fibers, and polycarbonate resin fibers. A nonwoven fabric made of a mixture of these may also be used.

The basis weight and the number of layers of the unidirectionally drawn and aligned sheet can be appropriately set according to the applications of the fiber-reinforced composite material. The basis weight of the unidirectionally drawn and aligned sheet is preferably 100 to 300 g/m², and more preferably 150 to 250 g/m², from the viewpoint of the balance among the formability of the fiber reinforcing base material, the molding efficiency of the fiber-reinforced composite material, and the mechanical properties of the resulting fiber-reinforced composite material. The thickness of one layer of the unidirectionally drawn and aligned sheet of the reinforcing fiber base material is preferably 0.01 to 3 mm, and more preferably 0.05 to 1.5 mm.

The present invention provides a fiber-reinforced composite material comprising a resin cured product obtained by curing the epoxy resin composition of the present invention and a fiber reinforcing base material.

The fiber-reinforced composite material provided by the present invention has a compression-after-impact (CAI) strength (impact energy 30.5 J), as measured by ASTM D7136, of preferably 240 MPa or more, more preferably 250 to 400 MPa, and more preferably 270 to 380 MPa.

The fiber-reinforced composite material provided by the present invention has a room temperature dry open-hole compression strength (RTD-OHC), as measured by SACMA SRM3, of preferably 260 MPa or more, more preferably 280 to 450 MPa, and more preferably 315 to 400 MPa.

The fiber-reinforced composite material provided by the present invention has an open-hole compression after high temperature water absorption (HTW-OHC) strength, as measured by SACMA SRM3, of preferably 200 MPa or more, more preferably 220 to 400 MPa, and more preferably 240 to 350 MPa.

### [Method for producing fiber-reinforced composite material]

The present invention is also a fiber-reinforced composite material containing the epoxy resin cured product and a fiber reinforcing base material. The fiber-reinforced composite material can be obtained by compositing and curing a fiber reinforcing base material and the epoxy resin composition of the present invention. A carbon fiber reinforcing base material is preferably used as the fiber reinforcing base material. Curing can be performed by heating.

Compositing of the fiber reinforcing base material and the epoxy resin composition may be performed in advance before molding or during molding. There can be used a molding method of a resin transfer molding method (RTM method), a hand lay-up method, a filament winding method, a pultrusion method, an autoclave molding method, and a press molding method.

The epoxy resin composition of the present invention is particularly suitable for the RTM method. Here, the RTM method is a method for obtaining a fiber-reinforced composite material by impregnating a fiber reinforcing base material placed in a mold with a liquid epoxy resin composition and curing the composition. From the viewpoint of efficiently obtaining a fiber-reinforced composite material with a complicated shape, the RTM method is a preferable molding method.

That is, the present invention further provides a method for producing a fiber-reinforced composite material, which comprises the steps of impregnating a fiber reinforcing base material placed in a mold with the epoxy resin composition of the present invention and heat curing the composition.

In the present invention, the mold used in the RTM method may be a closed mold made of a rigid material, or an open mold made of a rigid material and a flexible film (bag). In the latter case, the fiber reinforcing base material can be placed between an open mold of rigid material and the flexible film.

There can be used rigid materials of, for example, metals such as steel and aluminum, fiber-reinforced plastics (FRP), wood, and gypsum. There can be used materials for the flexible film of, for example, polyamide, polyimide, polyester, fluororesin, and silicone resin.

When a closed mold made of a rigid material is used in the RTM method, the mold is pressed and clamped, and the epoxy resin composition is pressurized and injected. In this case, a suction port may be provided separately from the injection port and connected to a vacuum pump for suction. The epoxy resin composition can be injected at atmospheric pressure only by suction without using special pressurizing means. This method allows a plurality of suction ports to be provided to manufacture a large-sized member, and thus is preferable.

When an open mold made of a rigid material and a flexible film are used in the RTM method, the epoxy resin composition may be injected at atmospheric pressure only by suction without using special pressurizing means. A resin diffusion medium is effectively used for achieving good impregnation by injection at atmospheric pressure only. Further, a gel coat may be applied to the surface of the rigid material prior to setting of the fiber reinforcing base material.

In the RTM method, a fiber reinforcing base material is impregnated with an epoxy resin composition, and then heat cured. The mold temperature during heat curing is generally selected as being higher than the mold temperature during injection of the epoxy resin composition. The mold temperature during heat curing is, for example, 80 to 200°C. The heat curing time is, for example, 1 minute to 20 hours.

After heat curing is completed, the fiber-reinforced composite material is demolded and taken out. The obtained fiber-reinforced composite material may then be post-cured by heating at a higher temperature. The post-curing temperature is, for example, 150 to 200°C, and the post-curing time is, for example, 1 minute to 4 hours.

The impregnation pressure when impregnating the fiber reinforcing base material with the epoxy resin composition by the RTM method should be appropriately determined in consideration of the viscosity and resin flow of the resin composition. A specific impregnation pressure is preferably 0.001 to 10 MPa, and more preferably 0.01 to 1 MPa.

The epoxy resin composition to be impregnated into the fiber reinforcing base material is produced by mixing a curing agent liquid of a curing agent composition for thermosetting resin and an epoxy base resin liquid. The above mixing is preferably performed just before the epoxy resin composition is impregnated into the fiber reinforcing base material.

That is, the production method of the present invention preferably further comprises a step of obtaining an epoxy resin composition by mixing the curing agent composition for thermosetting resin and the epoxy base resin of the present invention just before impregnation into a fiber reinforcing base material placed in a mold.

The curing agent composition for thermosetting resin of the present invention has high reactivity with epoxy resins. The curing agent liquid is mixed with the epoxy base resin to form an epoxy resin composition just before the epoxy resin composition is impregnated into a reinforcing fiber base material, which enables a sufficient amount of the epoxy resin composition to be impregnated inside the reinforcing fiber base material before the viscosity of the epoxy resin composition is increased. Therefore, the obtained fiber-reinforced composite material does not contain defects such as voids, and is excellent in compression performance and damage tolerance.

Thus, according to the present invention, a method for producing a fiber-reinforced composite material is provided. That is, provided is a method for producing a fiber-reinforced composite material comprising a step of impregnating a fiber reinforcing base material with the epoxy resin composition of the present invention to form an impregnated base material, and a step of curing the impregnated base material obtained in the above step.

In this production method, the step of impregnating a fiber reinforcing base material with the epoxy resin composition of the present invention to form an impregnated base material preferably corresponds to the step of impregnating a fiber reinforcing base material placed in a mold with the epoxy resin composition of the present invention to form an impregnated base material, and the step of curing the impregnated base material obtained in the above step preferably corresponds to the step of heat curing the impregnated base material.

Further, it is preferable that a step of preparing an epoxy resin composition of the present invention is included just before the step of impregnating a fiber reinforcing base material with the epoxy resin composition of the present invention to form an impregnated base material.

### [Examples]

The present invention will be described in more detail below with reference to Examples. Components and evaluation methods used in Examples and Comparative examples are described below.

### 1. Raw material for epoxy resin composition

### (1) Curing agent

### (1-1) Curing agent A

- 4,4'-Diamino-3,3'-diisopropyl-5,5'-dimethyldiphenylmethane (Lonzacure M-MIPA (product name) manufactured by Lonza, hereinafter abbreviated as "M-MIPA", melting point 70°C, solid at 25°C)

### (1-2) Curing agent B

- Diethyltoluenediamine (Heart Cure 10 (product name) manufactured by KUMIAI CHEMICAL INDUSTRY CO., LTD., hereinafter abbreviated as "DETDA", liquid at 25°C)

### (1-3) Curing agent C

- 2,5-Dimethylaniline (manufactured by Tokyo Chemical Industry Co., Ltd., hereinafter abbreviated as "25DMA", melting point 11°C, liquid at 25°C)
- 4-Methoxybenzylamine (manufactured by Tokyo Chemical Industry Co., Ltd., hereinafter abbreviated as "4MxBA", liquid at 25°C)
- 3,4-Dimethoxybenzylamine (manufactured by Tokyo Chemical Industry Co., Ltd., hereinafter abbreviated as "34DMxBA", liquid at 25°C)
- 3-Methoxybenzylamine (manufactured by Tokyo Chemical Industry Co., Ltd., hereinafter abbreviated as "3MxBA", liquid at 25°C)
- 4-Methylbenzylamine (manufactured by Tokyo Chemical Industry Co., Ltd., hereinafter abbreviated as "4MBA", melting point 13°C, liquid at 25°C)

### (1-4) Other curing agent

- m-Phenylenediamine (manufactured by FUJIFILM Wako Pure Chemical Corporation, hereinafter abbreviated as "MPD", melting point 65°C, solid at 25°C)
- m-Toluidine (manufactured by Tokyo Chemical Industry Co., Ltd., hereinafter abbreviated as "mTOL", liquid at 25°C)
- 4-Phenoxyaniline (manufactured by Tokyo Chemical Industry Co., Ltd., hereinafter abbreviated as "PxAN", melting point 85°C, solid at 25°C)
- 3-Isopropylaniline (manufactured by Tokyo Chemical Industry Co., Ltd., hereinafter abbreviated as "iPrAN", liquid at 25°C)
- 3-Ethylaniline (manufactured by Tokyo Chemical Industry Co., Ltd., hereinafter abbreviated as "EtAN", liquid at 25°C)
- m-Xylylenediamine (mixture of cis- and trans-) (manufactured by Tokyo Chemical Industry Co., Ltd., hereinafter abbreviated as "mXDA", liquid at 25°C)

### (2) Epoxy resin

### (2-1) Epoxy resin D

- Tetraglycidyl-4,4'-diaminodiphenylmethane (Araldite MY721 (product name) manufactured by Huntsman Corporation, hereinafter abbreviated as "4,4'-TGDDM")
- Tetraglycidyl-3,4'-diaminodiphenyl ether

This was synthesized by the method of Synthesis Example 1 described below. Hereinafter, it is abbreviated as "3,4'-TGDDE."

### (2-2) Epoxy resin E

- N,N-Diglycidyl-o-toluidine (GOT (product name) manufactured by Nippon Kayaku Co., Ltd., hereinafter abbreviated as "GOT")
- N,N-Diglycidylaniline (GAN (product name) manufactured by Nippon Kayaku Co., Ltd., hereinafter abbreviated as "GAN")
- Triglycidyl-p-aminophenol (Araldite MY0510 (product name) manufactured by Huntsman Corporation, hereinafter abbreviated as "TG-pAP")
- 1,6-bis(Glycidyloxy)naphthalene (HP-4032SS (product name) manufactured by DIC Corporation, hereinafter abbreviated as "1,6-DON")
- 1,3,5-Triglycidyl isocyanurate (TEPIC-S (product name) manufactured by Nissan Chemical Corporation, hereinafter abbreviated as "TEPIC")
- Bisphenol A-diglycidyl ether (jER825 (product name) manufactured by Mitsubishi Chemical Corporation, hereinafter abbreviated as "DGEBA")
- Tetraglycidyl-3,4'-diaminodiphenyl ether

This was synthesized by the method of Synthesis Example 1 described below.
Hereinafter, it is abbreviated as "3,4'-TGDDE."

### (2-3) 3,4'-TGDDE

Synthesis was performed in the following manner.

### [Synthesis Example 1]

### Synthesis of 3,4'-TGDDE

Epichlorohydrin (1110.2 g, 12.0 mol) was charged in a four-necked flask equipped with a thermometer, a dropping funnel, a condenser, and a stirrer, and heated to a temperature of 70°C while purging with nitrogen, thereto added dropwise over 4 hours was 3,4'-diaminodiphenyl ether (200.2 g, 1.0 mol) dissolved in ethanol (1000 g).

The reaction solution was further stirred for 6 hours to complete the addition reaction and give N,N,N',N'-tetrakis(2-hydroxy-3-chloropropyl)-3,4'-diaminodiphenyl ether. Subsequently, the inside of the flask was cooled to a temperature of 25°C, thereto added dropwise over 2 hours was a 48% NaOH aqueous solution (500.0 g, 6.0 mol), and the mixture was further stirred for 1 hour.

After completion of the cyclization reaction, ethanol was distilled off, extraction was performed with toluene (400 g), and washing was performed twice with 5% saline. Toluene and epichlorohydrin were removed from the organic layer under reduced pressure to obtain a brown viscous liquid (361.7 g, yield 85.2%) containing 3,4'-TGDDE as a main component.

### (3) Resin particles F (particulate rubber component)

- MX-416 (MX-416 (product name) manufactured by Kaneka Corporation) This is a master batch in which a particulate butadiene rubber component is dispersed in a glycidylamine-type tetrafunctional epoxy resin to a concentration of 25 mass%. The glycidylamine type tetrafunctional epoxy resin in MX-416 corresponds to epoxy resin D.)

### (4) Carbon fiber strand

- Carbon fiber 1: Tenax (registered trademark) IMS65 E23 830tex (carbon fiber strand, tensile strength 5.8 GPa, tensile modulus 290 GPa, sizing agent attached amount 1.2 mass%, manufactured by Teijin Limited)

### (5) Thermoplastic resin nonwoven fabric

- Nonwoven fabric 1: Nonwoven fabric with a fiber basis weight of 5 g/m² produced by a spunbonding method using polyamide 12 resin

### (6) Carbon fiber multilayer fabric

- Carbon fiber multiaxial fabric 1: Unidirectionally drawn and aligned Carbon fiber 1 is formed into a sheet shape of 190 g/m² per layer, and Nonwoven fabric 1 is arranged on one side of the sheet-shaped carbon fiber, 4 sheets of which are laminated at the angles of (+45/V/90/V/-45/V/0/V) and stitched (total basis weight of carbon fiber in fabric base material: 760 g/m²).
- Carbon fiber multiaxial fabric 2: Unidirectionally drawn and aligned Carbon fiber 1 is formed into a sheet shape of 190 g/m² per layer, and Nonwoven fabric 1 is arranged on one side of the sheet-shaped carbon fiber, 4 sheets of which are laminated at the angles of (-45/V/90/V/+45/V/0/V) and stitched (total basis weight of carbon fiber in fabric base material: 760 g/m²).

Here, V indicates nonwoven fabric 1.
2. Evaluation method (Evaluation method for examples 1 to 9, 11 to 18, and comparative examples 1 to 2, and 11 to 17)

### (1) Properties of curing agent composition

### (1-1) Preparation of curing agent composition

Curing agents were weighed in the proportions listed in Table 1 and mixed using a stirrer at an appropriate temperature of 90 to 110°C for 60 minutes to prepare a curing agent composition.

### (1-2) Inspection of liquid retention of curing agent composition

The curing agent composition prepared in above (1-1) was stored at room temperature (25°C) for one week, and it was visually examined whether solid components were precipitated. "OK" was given when there was no precipitation, and "NG" was given when precipitation was observed.

### (2) Properties of resin composition

### (2-1) Preparation of epoxy resin composition

The curing agent composition prepared in above (1-1), the epoxy resin, and the particulate rubber component were weighed in the proportions shown in Table 1, 2, or 3, and mixed using a stirrer at 80°C for 60 minutes to prepare an epoxy resin composition. Note that, in the compositions shown in Table 1, 2, or 3 the epoxy groups of the epoxy resin and the active hydrogens of the curing agent are equivalent.

### (2-2) Initial viscosity and pot life

The viscosity was measured at 100°C using a B-type viscometer TVB-15M manufactured by Toki Sangyo Co., Ltd. The minimum measured value obtained immediately after the start of measurement was taken as the initial viscosity, and the time until the viscosity reached 50 mPa·s was taken as the pot life.

### (3) Properties of resin cured product

### (3-1) Preparation of resin cured product

The epoxy resin composition prepared in above (2-1) was defoamed in vacuum, and then injected into a stainless steel mold set to give a thickness of 4 mm using a 4 mm-thick silicone resin spacer. The composition was cured at a temperature of 180°C for 30 minutes to obtain a resin cured product having a thickness of 4 mm.

### (3-2) Glass transition temperature after water absorption (wet-Tg)

The glass transition temperature was measured in accordance with the SACMA 18R-94 method.

The resin test pieces were prepared with dimensions of 50 mm × 6 mm × 2 mm. Using a pressure cooker (HASTEST PC-422R8, manufactured by ESPEC Corp.), the prepared resin test piece was subjected to water absorption treatment under the conditions of 121°C and 24 hours. Using a dynamic viscoelasticity measuring device Rheogel-E400 manufactured by UBM, under the conditions including the measurement frequency of 1 Hz, the temperature rise rate of 5 °C/min, and the strain of 0.0167%, the distance between the chucks was set to 30 mm, and the storage elastic modulus E' of the resin test piece subjected to water absorption treatment was measured in the temperature range of from 50°C to the rubber elastic region. Log E' was plotted against temperature, and the temperature obtained from the intersection of the approximate straight line of log E' in the flat region and that in the transition region was recorded as the glass transition temperature (wet-Tg).

### (3-3) Room temperature dry flexural modulus (RTD-FM)

The test was performed in accordance with the JIS K7171 method. In this case, the resin test pieces prepared had dimensions of 80 mm × 10 mm × 4 mm (thickness h). A bending test was performed under the conditions of a distance L between fulcrums of 16 × h (thickness), and a test speed of 2 m/min to measure room temperature dry flexural modulus (RTD-FM).

### (3-4) Deformation mode I critical stress intensity factor K1c

The tests were performed in accordance with ASTM D5045 method. The resin test pieces in this case were prepared with dimensions of 50 mm × 8 mm (width W) × 4 mm. The crack length 'a' was adjusted so that 0.45≤a/W≤0.55. Note that, the length to the crack tip was measured by observing the fracture surface after the fracture test with an optical microscope, and the average value of the crack lengths on both surfaces of the test piece was adopted as the crack length 'a'.

### (4) Properties of CFRP

### (4-1) Preparation of CFRP

Carbon fiber multiaxial fabric 1 and Carbon fiber multiaxial fabric 2 each were cut to 300 × 300 mm, and 3 sheets of Carbon fiber multiaxial fabric 1 and 3 sheets of Carbon fiber multiaxial fabric 2, 6 sheets in total, were stacked on a release agent-treated aluminum plate of 500 × 500 mm to form a laminate.

Further, on the laminate stacked were a peel cloth of Release Ply C (manufactured by AIRTECH) of a base material imparted with a releasability function, and a resin diffusion base material of Resin Flow 90HT (manufactured by AIRTECH). Subsequently, a hose for forming a resin inlet port and a resin outlet port was arranged, the whole was covered with a nylon bag film and sealed with a sealant tape, and the inside was evacuated. Further, the aluminum plate was heated to 120°C, the pressure inside the bag was evacuated to 5 torr or less, and then the epoxy resin composition prepared in (2) (2-1) above was heated to 100°C and injected into the vacuum system through the resin inlet port.

The injected epoxy resin composition was filled in the bag and impregnated into the laminate, and then the temperature was raised to 180°C and held at 180°C for 40 minutes to obtain carbon fiber-reinforced composite material (CFRP).

### (4-2) Compression-after-impact (CAI) strength

The CFRP obtained in (4-1) above was cut into a size of width 101.6 mm × length 152.4 mm to obtain a test piece for a compression-after-impact (CAI) strength test. The test was performed in accordance with ASTM D7136. The dimensions of each test piece were measured, and the test piece was subjected to an impact test by applying an impact energy of 30.5 J using a drop weight impact tester (Dynatup manufactured by Instron). After the impact, the damaged area of the test piece was measured with an ultrasonic crack inspector (SDS3600, HIS3/HF manufactured by Kraut Kramer). After the impact, in the strength test for the test piece, 4 strain gauges in total per body were attached to the impacted test piece, 2 gauges each at a position of 25.4 mm from the left side and right side and 25.4 mm from the top on the front side, and the same on the back side, and then the crosshead speed of the testing machine (Autograph manufactured by Shimadzu Corporation) was set at 1.27 mm/min, and a load was applied until the test piece broke.

### (4-3) Room temperature dry open-hole compression strength (RTD-OHC)

The CFRP obtained in (4-1) above was cut into a piece with a size of width 38.1 mm × length 304.8 mm, and at the center of the piece, a hole with a diameter of 6.35 mm was drilled to obtain a test piece for room temperature dry open-hole compression strength (RTD-OHC) test.

The test was performed in accordance with SACMA SRM3 at an ambient temperature of 25°C, and the open hole compression strength was calculated from the maximum point load.

### 3. Evaluation method (Evaluation method for examples 21 to 29)

### (1) Properties of resin composition

### (1-1) Preparation of epoxy resin composition

Epoxy resin and resin particles were weighed in the proportions shown in Table 4, and mixed using a stirrer at 80°C for 30 minutes to prepare an epoxy base resin liquid. Curing agent components were weighed in the proportions shown in Table 4 and mixed using a stirrer at 80°C for 30 minutes to prepare a curing agent liquid. The epoxy base resin liquid and the curing agent liquid prepared separately were mixed using a stirrer at 80°C for 30 minutes to prepare an epoxy resin composition. Note that, in the compositions shown in Table 4, the glycidyl groups of the epoxy resin and the amino groups of the curing agent are equivalent.

### (1-2) Liquid state retention property of curing agent liquid

The curing agent liquid prepared in (1-1) above was stored at 25°C for one week, and it was visually examined whether solid components were precipitated. "OK" was given when there was no precipitation, and "NG" was given when precipitation was observed.

### (1-3) Initial viscosity and pot life

The viscosity was measured at 120°C using a B-type viscometer TVB-15M manufactured by Toki Sangyo Co., Ltd. The minimum measured value obtained immediately after the start of measurement was taken as the initial viscosity, and the time until the viscosity reached 50 mPa·s was taken as the pot life.

### (2) Properties of resin cured product

### (2-1) Preparation of resin cured product

The epoxy resin composition prepared in (1-1) above was defoamed in vacuum for 60 minutes, and then injected into a stainless steel mold set to give a thickness of 4 mm using a 4 mm-thick Teflon (registered trademark) resin spacer. The composition was heat cured at a temperature of 180°C for 40 minutes to obtain a resin cured product having a thickness of 4 mm.

### (2-2) Glass transition temperature after water absorption (wet-Tg)

The glass transition temperature was measured in accordance with the SACMA 18R-94 method.

The resin test pieces were prepared with dimensions of 50 mm × 6 mm × 2 mm. Using a pressure cooker (HASTEST PC-422R8, manufactured by ESPEC Corp.), the prepared resin test piece was subjected to water absorption treatment under the conditions of 121°C and 24 hours. Using a dynamic viscoelasticity measuring device Rheogel-E400 manufactured by UBM, under the conditions including the measurement frequency of 1 Hz, the temperature rise rate of 5 °C/min, and the strain of 0.0167%, the distance between the chucks was set to 30 mm, and the storage elastic modulus E' of the resin test piece subjected to water absorption treatment was measured in the temperature range of from 50°C to the rubber elastic region. Log E' was plotted against temperature, and the temperature obtained from the intersection of the approximate straight line of log E' in the flat region and that in the transition region was recorded as the glass transition temperature (wet-Tg).

### (2-3) Room temperature dry flexural modulus (RTD-FM)

The test was performed in accordance with the JIS K7171 method. The resin cured plate obtained in (2-1) above was used to prepare a resin test piece with dimensions of 80 mm × 10 mm × 4 mm (thickness h). A bending test was performed under the conditions of an ambient temperature at 25°C, a distance L between fulcrums of 16 × h (thickness), and a test speed of 2 mm/min to measure room temperature dry flexural modulus (RTD-FM).

### (2-4) Resin cured product toughness (deformation mode I critical stress intensity factor KIc)

In accordance with ASTM D5045, the toughness (KIc) was measured using a universal testing machine (Autograph manufactured by Shimadzu Corporation). The tests were performed in accordance with ASTM D5045 method. The resin cured plate obtained in (2-1) above was used to prepare a resin test piece with dimensions of 50 mm × 8 mm (width W) × 4 mm. The crack length 'a' was adjusted so that 0.45≤a/W≤0.55. Note that, the length to the crack tip was measured by observing the fracture surface after the fracture test with an optical microscope, and the average value of the crack lengths on both surfaces of the test piece was adopted as the crack length 'a'.

### (3) Properties of CFRP

### (3-1) Preparation of CFRP

Carbon fiber multiaxial fabric 1 and Carbon fiber multiaxial fabric 2 each were cut to 300 × 300 mm, and 3 sheets of Carbon fiber multiaxial fabric 1 and 3 sheets of Carbon fiber multiaxial fabric 2, 6 sheets in total, were stacked on a release agent-treated aluminum plate of 500 × 500 mm to form a laminate.

Further, on the laminate stacked were a peel cloth of Release Ply C (manufactured by AIRTECH) of a base material imparted with a releasability function, and a resin diffusion base material of Resin Flow 90HT (manufactured by AIRTECH). Subsequently, a hose for forming a resin inlet port and a resin outlet port was arranged, the whole was covered with a nylon bag film and sealed with a sealant tape, and the inside was evacuated. Further, the aluminum plate was heated to 120°C, the pressure inside the bag was evacuated to 5 torr or less, and then the epoxy resin composition prepared in (1-1) above was heated to 100°C and injected into the vacuum system through the resin inlet port.

The injected epoxy resin composition was filled in the bag and impregnated into the laminate, and then the temperature was raised to 180°C and held at 180°C for 40 minutes to obtain carbon fiber-reinforced composite material (CFRP).

### (3-2) Compression-after-impact (CAI) strength

The CFRP obtained in (3-1) above was cut into a size of width 101.6 mm × length 152.4 mm to obtain a test piece for a compression-after-impact (CAI) strength test. The test was performed in accordance with ASTM D7136. After the dimensions of each test piece were measured, the test piece was subjected to an impact test by applying an impact energy of 30.5 J using a drop weight impact tester (Dynatup manufactured by Instron). After the impact, the damaged area of the test piece was measured with an ultrasonic crack inspector (SDS3600, HIS3/HF manufactured by Kraut Kramer). After the impact, in the strength test for the test piece, 4 strain gauges in total per body were attached to the impacted test piece, 2 gauges each at a position of 25.4 mm from the left side and right side and 25.4 mm from the top on the front side, and the same on the back side, and then the crosshead speed of the testing machine (Autograph manufactured by Shimadzu Corporation) was set at 1.27 mm/min, and a load was applied until the test piece broke.

### (3-3) Room temperature dry open-hole compression strength (RTD-OHC)

The CFRP obtained in (3-1) above was cut into a piece with a size of width 38.1 mm × length 304.8 mm, and at the center of the piece, a hole with a diameter of 6.35 mm was drilled to obtain a test piece for room temperature dry open-hole compression strength (RTD-OHC) test.

The test was performed in accordance with SACMA SRM3 at an ambient temperature of 25°C, and the open hole compression strength was calculated from the maximum point load.

### [Example 1]

### (Preparation of curing agent composition)

Curing agents were weighed in the proportions listed in Table 1 and mixed using a stirrer at a temperature of 90°C for 60 minutes to prepare a curing agent composition.

### (Preparation of epoxy resin composition)

The curing agent composition prepared above, the epoxy resin, and the particulate rubber component were weighed in the proportions shown in Table 1, and mixed using a stirrer at 80°C for 60 minutes to prepare an epoxy resin composition. Note that, in the compositions shown in Table 1, the epoxy groups of the epoxy resin and the active hydrogens of the curing agent are equivalent.

### (Preparation of resin cured product)

The epoxy resin composition prepared above was defoamed in vacuum, and then injected into a stainless steel mold set to give a thickness of 4 mm using a 4 mm-thick silicone resin spacer. The composition was cured at a temperature of 180°C for 30 minutes to obtain a resin cured product having a thickness of 4 mm.

**[Table 1]**

| (Ex: Example, Cex: Comparative example) | | | | Ex 1 | Ex 2 | Ex 3 | Ex 4 | Ex 5 | Ex 6 | Ex 7 | Ex 8 | Ex 9 | Cex 1 | Cex 2 |
|---|---|---|---|---|---|---|---|---|---|---|---|---|---|---|
| Curing agent composition for thermosetting resin | Curing agent A | M-MIPA | (parts by mass) | 9.7 | 9.8 | 9.9 | 12.4 | 9.7 | 9.7 | 9.8 | 9.8 | 9.7 | 9.4 | 23.5 |
| | Curing agent B | DETDA | (parts by mass) | 8.8 | 8.8 | 8.9 | 6.2 | 7.8 | 8.7 | 8.8 | 8.8 | 8.8 | 8.4 | |
| | Curing agent C | 25DMA | (parts by mass) | 1.0 | 1.0 | 1.0 | 1.9 | 1.6 | | | | | | |
| | Other curing agents | MPD | (parts by mass) | | | | 0.2 | 0.4 | | | | | 0.9 | |
| | | mTOL | (parts by mass) | | | | | | 1.0 | | | | | |
| | | PxAN | (parts by mass) | | | | | | | 1.0 | | | | |
| | | iPrAN | (parts by mass) | | | | | | | | 1.0 | | | |
| | | EtAN | (parts by mass) | | | | | | | | | 1.0 | | |
| Epoxy resin D | | 3,4'-TGDDE | (parts by mass) | 17.5 | 19.6 | 21.6 | 23.0 | 19.5 | 17.5 | 17.3 | 17.5 | 17.5 | 17.8 | 14.7 |
| Epoxy resin E | | GAN | (parts by mass) | 11.4 | 11.5 | 11.6 | 9.5 | 11.4 | 11.4 | 11.3 | 11.4 | 11.4 | 11.5 | 10.2 |
| Resin particle F | | MX-416 | (parts by mass) | 12.1 | 9.7 | 7.2 | 7.3 | 9.6 | 12.1 | 12.1 | 12.1 | 12.1 | 12.0 | 12.1 |
| Proportion of each curing agent component | Proportion of curing agent A | | (mass%) | 50 | 50 | 50 | 60 | 50 | 50 | 50 | 50 | 50 | 50 | 100 |
| | Proportion of curing agent B | | (mass%) | 45 | 45 | 45 | 30 | 40 | 45 | 45 | 45 | 45 | 45 | 0 |
| | Proportion of curing agent C | | (mass%) | 5 | 5 | 5 | 9 | 8 | 0 | 0 | 0 | 0 | 0 | 0 |
| | Proportion of other curing agents | | (mass%) | 0 | 0 | 0 | 1 | 2 | 5 | 5 | 5 | 5 | 5 | 0 |
| Proportion of each component of epoxy base resin liquid | | Proportion of epoxy resin D | (mass%) | 70 | 70 | 70 | 75 | 70 | 70 | 70 | 70 | 70 | 70 | 70 |
| | | Proportion of epoxy resin E | (mass%) | 30 | 30 | 30 | 25 | 30 | 30 | 30 | 30 | 30 | 30 | 30 |
| Mass proportion of resin particles F with respect to total amount of epoxy resin and curing agent (100 mass%) | | | (mass%) | 5 | 4 | 3 | 3 | 4 | 5 | 5 | 5 | 5 | 5 | 5 |
| Ratio of total number of active hydrogens in amine groups with respect to total number of epoxy groups | | | | 1.0 | 1.0 | 1.0 | 1.0 | 1.0 | 1.0 | 1.0 | 1.0 | 1.0 | 1.0 | 1.0 |
| Properties of curing agent composition for thermosetting resin | | Liquid state retention | | OK | OK | OK | OK | OK | OK | OK | OK | OK | OK | NG |
| Epoxy resin composition properties | | Initial viscosity (100°C) | (mPa·s) | 27 | 27 | 26 | 28 | 25 | 29 | 28 | 26 | 29 | 32 | - |
| | | Pot life (100°C) | (min) | 108 | 110 | 130 | 118 | 114 | 106 | 106 | 108 | 115 | 72 | - |
| Epoxy resin cured product properties | | wet-Tg | (°C) | 153 | 144 | 143 | 157 | 155 | 158 | 159 | 155 | 160 | 162 | - |
| | | RTD-FM | (GPa) | 3.6 | 3.6 | 3.7 | 3.7 | 3.6 | 3.5 | 3.5 | 3.4 | 3.4 | 3.7 | - |
| | | K1c | (MPa·m^{1/2}) | 0.95 | 0.90 | 0.88 | 0.88 | 0.92 | 0.95 | 0.93 | 0.92 | 0.97 | 0.84 | - |
| CFRP properties | | CAI | (MPa) | 325 | 314 | 300 | 292 | 303 | 290 | 282 | 309 | 314 | 278 | - |
| | | RTD-OHC | (MPa) | 329 | 320 | 337 | 333 | 325 | 314 | 311 | 314 | 326 | 330 | - |

Table 1 shows the properties of the curing agent composition, the resin composition and the resin cured product. The curing agent composition maintained a liquid state for one week or longer. The resin composition exhibited a low viscosity of 27 mPa·s at 100°C and a pot life of 108 minutes. The flexural modulus was 3.6 GPa and the K1c was 0.95 MPa·m^{1/2}, showing high mechanical properties.

### [Examples 2 to 5]

The procedure was conducted in the same manner as in Example 1 with the composition changed as shown in Table 1. Table 1 shows the properties of the curing agent composition, the resin composition, and the resin cured product. The curing agent composition maintained a liquid state for one week or longer. The resin composition exhibited a low viscosity of 28 mPa·s at 100°C and a pot life of 110 minutes or more. The flexural modulus was 3.6 GPa or more and the K1c was 0.88 MPa·m^{1/2} or more, showing high mechanical properties.

### [Examples 6 to 9]

The procedure was conducted in the same manner as in Example 1 with the composition changed as shown in Table 1. Table 1 shows the properties of the resin cured product.

### [Comparative example 1]

The procedure was conducted in the same manner as in Example 1 with the composition changed as shown in Table 1. Table 1 shows the properties of the curing agent composition. The pot life was shortened to 72 minutes. Furthermore, the K1c was 0.84 MPa·m^{1/2}, showing insufficient toughness.

### [Comparative example 2]

The procedure was conducted in the same manner as in Example 1 with the composition changed as shown in Table 1. Table 1 shows the properties of the curing agent composition. The liquid state retention was difficult due to solid precipitation within one week.

### [Example 11]

### (Preparation of curing agent composition)

Curing agents were weighed in the proportions listed in Table 2 and mixed using a stirrer at a temperature of 90°C for 60 minutes to prepare a curing agent composition.

### (Preparation of epoxy resin composition)

The curing agent composition prepared above, the epoxy resin, and the particulate rubber component were weighed in the proportions shown in Table 2, and mixed using a stirrer at 80°C for 60 minutes to prepare an epoxy resin composition. Note that, in the compositions shown in Table 2, the epoxy groups of the epoxy resin and the active hydrogens of the curing agent are equivalent.

### (Preparation of resin cured product)

The epoxy resin composition prepared above was defoamed in vacuum, and then injected into a stainless steel mold set to give a thickness of 4 mm using a 4 mm-thick silicone resin spacer. The composition was cured at a temperature of 180°C for 30 minutes to obtain a resin cured product having a thickness of 4 mm.

Table 2 shows the properties of the curing agent composition, the resin composition and the resin cured product. The curing agent composition maintained a liquid state for one week or longer. The resin composition exhibited a low viscosity of 30 mPa's at 100°C and a pot life of 58 minutes. The flexural modulus was 3.5 GPa and the K1c was 0.96 MPa·m^{1/2}, showing high mechanical properties.

### [Examples 12 to 18]

The procedure was conducted in the same manner as in Example 11 with the composition changed as shown in Table 2. Table 1 shows the properties of the curing agent composition, the resin composition, and the resin cured product. The curing agent composition maintained a liquid state for one week or longer. The resin composition exhibited a low viscosity of 39 mPa s at 100°C and a pot life of 22 minutes or more. The flexural modulus was 3.4 GPa or more, and the K1c was 0.91 MPa·m^{1/2} or more, showing high mechanical properties.

**[Table 2]**

| (Ex: Example) | | | | Ex 11 | Ex 12 | Ex 13 | Ex 14 | Ex 15 | Ex 16 | Ex 17 | Ex 18 |
|---|---|---|---|---|---|---|---|---|---|---|---|
| Curing agent composition for thermosetting resin | Curing agent A | M-MIPA | (parts by mass) | 9.8 | 10.0 | 9.8 | 10.1 | 9.8 | 9.9 | 9.7 | 9.8 |
| | Curing agent B | DETDA | (parts by mass) | 8.8 | 8.0 | 8.8 | 8.0 | 8.8 | 7.9 | 8.7 | 7.8 |
| | Curing agent C | 4MxBA | (parts by mass) | 1.0 | 2.0 | | | | | | |
| | | 34DMxBA | (parts by mass) | | | 1.0 | 2.0 | | | | |
| | | 3MxBA | (parts by mass) | | | | | 1.0 | 2.0 | | |
| | | 4MBA | (parts by mass) | | | | | | | 1.0 | 2.0 |
| | Other curing agents | mXDA | (parts by mass) | | | | | | | | |
| | | MPD | (parts by mass) | | | | | | | | |
| Epoxy resin D | | 4,4'-TGDDM | (parts by mass) | 17.5 | 17.4 | 17.3 | 17.2 | 17.5 | 17.3 | 17.5 | 17.3 |
| Epoxy resin E | | GAN | (parts by mass) | 11.4 | 11.4 | 11.3 | 11.3 | 11.4 | 11.3 | 11.4 | 11.3 |
| Resin particle F | | MX-416 | (parts by mass) | 12.1 | 12.2 | 12.0 | 12.1 | 12.1 | 12.1 | 12.1 | 12.0 |
| Proportion of each curing agent component | Proportion of curing agent A | | (mass%) | 50 | 50 | 50 | 50 | 50 | 50 | 50 | 50 |
| | Proportion of curing agent B | | (mass%) | 45 | 40 | 45 | 40 | 45 | 40 | 45 | 40 |
| | Proportion of curing agent C | | (mass%) | 5 | 10 | 5 | 10 | 5 | 10 | 5 | 10 |
| | Proportion of other curing agents | | (mass%) | 0 | 0 | 0 | 0 | 0 | 0 | 0 | 0 |
| Proportion of each component of epoxy base resin liquid | | Proportion of epoxy resin D | (mass%) | 70 | 70 | 70 | 70 | 70 | 70 | 70 | 70 |
| | | Proportion of epoxy resin E | (mass%) | 30 | 30 | 30 | 30 | 30 | 30 | 30 | 30 |
| Mass proportion of resin particles F with respect to total amount of epoxy resin and curing agent (100 mass%) | | | (mass%) | 5 | 5 | 5 | 5 | 5 | 5 | 5 | 5 |
| Ratio of total number of active hydrogens in amine groups with respect to total number of epoxy groups | | | | 1.0 | 1.0 | 1.0 | 1.0 | 1.0 | 1.0 | 1.0 | 1.0 |
| Properties of curing agent composition for thermosetting resin | | Liquid state retention | | OK | OK | OK | OK | OK | OK | OK | OK |
| Epoxy resin composition properties | | Initial viscosity (100°C) | (mPa·s) | 30 | 34 | 30 | 34 | 30 | 33 | 32 | 39 |
| | | Pot life (100°C) | (min) | 58 | 26 | 65 | 33 | 57 | 32 | 50 | 22 |
| Epoxy resin cured product properties | | wet-Tg | (°C) | 159 | 138 | 149 | 144 | 149 | 142 | 150 | 146 |
| | | RTD-FM | (GPa) | 3.5 | 3.6 | 3.4 | 3.4 | 3.4 | 3.7 | 3.5 | 3.6 |
| | | K1c | (MPa·m^{1/2}) | 0.96 | 0.97 | 0.91 | 0.97 | 0.93 | 0.94 | 0.93 | 0.93 |
| CFRP properties | | CAI | (MPa) | 315 | 299 | 281 | 295 | 289 | 322 | 312 | 300 |
| | | RTD-OHC | (MPa) | 328 | 330 | 310 | 313 | 306 | 340 | 321 | 319 |

### [Comparative example 11 to 12]

The procedure was conducted in the same manner as in Example 11 with the composition changed as shown in Table 3. Table 3 shows the properties of the resin cured product. In all cases, the pot life was as short as less than 18 minutes, and the K1c was less than 0.89 MPa·m^{1/2}, showing insufficient toughness.

### [Comparative example 14]

The procedure was conducted in the same manner as in Example 11 with the composition changed as shown in Table 3. Table 3 shows the properties of the resin cured product. In all cases, K1c was less than 0.88 MPa·m^{1/2}, showing insufficient toughness.

### [Comparative example 15 to 16]

The procedure was conducted in the same manner as in Example 11 with the composition changed as shown in Table 3. Table 3 shows the properties of the resin cured product. In all cases, the flexural modulus was as low as less than 3.3 GPa, showing insufficient rigidity, and the K1c was less than 0.89 MPa·m^{1/2}, showing insufficient toughness.

### [Comparative example 17]

The procedure was conducted in the same manner as in Example 11 with the composition changed as shown in Table 3. Table 3 shows the properties of the curing agent composition. The liquid state retention was difficult due to solid precipitation within one week.

**[Table 3]**

| (Cex: Comparative example)- | | | | Cex 11 | Cex 12 | Cex 14 | Cex 15 | Cex 16 | Cex 17 |
|---|---|---|---|---|---|---|---|---|---|
| Curing agent composition for thermosetting resin | Curing agent A | M-MIPA | (parts by mass) | 9.6 | 9.4 | 9.2 | 10.3 | | 23.5 |
| | Curing agent B | DETDA | (parts by mass) | 8.6 | 7.5 | 7.3 | 9.1 | 16.2 | |
| | Curing agent C | 4MxBA | (parts by mass) | | | | | | |
| | | 34DMxBA | (parts by mass) | | | | | | |
| | | 3MxBA | (parts by mass) | | | | | | |
| | | 4MBA | (parts by mass) | | | | | | |
| | Other curing agents | mXDA | (parts by mass) | 1.0 | 1.9 | | | | |
| | | MPD | (parts by mass) | | | 1.8 | | | |
| EpoxyresinD | | 4,4'-TGDDM | (parts by mass) | 18.0 | 18.0 | 18.5 | 17.5 | 19.6 | 14.7 |
| Epoxy resin E | | GAN | (parts by mass) | 11.6 | 11.6 | 11.8 | 11.4 | 12.3 | 10.2 |
| Resin particle F | | MX-416 | (parts by mass) | 12.2 | 12.1 | 12.2 | 12.1 | 12.0 | 12.1 |
| Proportion of each curing agent component | Proportion of curing agent A | | (mass%) | 50 | 50 | 50 | 53 | 0 | 100 |
| | Proportion of curing agent B | | (mass%) | 45 | 40 | 40 | 47 | 100 | 0 |
| | Proportion of curing agent C | | (mass%) | 0 | 0 | 0 | 0 | 0 | 0 |
| | Proportion of other curing agents | | (mass%) | 5 | 10 | 10 | 0 | 0 | 0 |
| Proportion of each component of epoxy base resin liquid | | Proportion of epoxy resin D | (mass%) | 70 | 70 | 70 | 70 | 70 | 70 |
| | | Proportion of epoxy resin E | (mass%) | 30 | 30 | 30 | 30 | 30 | 30 |
| Mass proportion of resin particles F with respect to total amount of epoxy resin and curing agent (100 mass%) | | | (mass%) | 5 | 5 | 5 | 5 | 5 | 5 |
| Ratio of total number of active hydrogens in amine groups with respect to total number of epoxy groups | | | | 1.0 | 1.0 | 1.0 | 1.0 | 1.0 | 1.0 |
| Properties of curing agent composition for thermosetting resin | | Liquid state retention | | OK | OK | OK | OK | OK | NG |
| Epoxy resin composition properties | | Initial viscosity (100°C) | (mPa·s) | 36 | 34 | 30 | 27 | 23 | - |
| | | Pot life (100°C) | (min) | 18 | 10 | 56 | 111 | 91 | - |
| Epoxy resin cured product properties | | wet-Tg | (°C) | 162 | 158 | 163 | 163 | 154 | - |
| | | RTD-FM | (GPa) | 3.5 | 3.5 | 3.4 | 3.3 | 3.2 | - |
| | | K1c | (MPa·m^{1/2}) | 0.89 | 0.88 | 0.76 | 0.89 | 0.79 | - |
| CFRP properties | | CAI | (MPa) | - | - | 261 | 288 | 268 | - |
| | | RTD-OHC | (MPa) | - | - | 322 | 310 | 304 | - |

### [Example 21]

### (Preparation of curing agent composition)

Curing agents were weighed in the proportions listed in Table 4 and mixed using a stirrer at a temperature of 90°C for 60 minutes to prepare a curing agent composition.

### (Preparation of epoxy resin composition)

The epoxy resin and resin particles F were weighed in the proportions shown in Table 4, and mixed using a stirrer at 80°C for 30 minutes to prepare an epoxy base resin liquid. Curing agents were weighed in the proportions shown in Table 4 and mixed using a stirrer at 80°C for 30 minutes to prepare a curing agent liquid. The epoxy base resin liquid and the curing agent liquid prepared separately were mixed using a stirrer at 80°C for 30 minutes to prepare an epoxy resin composition.

Table 4 shows the properties of the obtained epoxy resin composition. Note that, in the compositions shown in Table 4, the glycidyl groups of the epoxy resin and the amino groups of the curing agent are equivalent.

The properties of the obtained curing agent composition and epoxy resin composition are shown in Table 4. The curing agent composition maintained a liquid state for one week or longer. The epoxy resin composition exhibited a low viscosity of 30 mPa·s at 120°C and a pot life of 68 minutes.

### (Preparation of resin cured product)

The epoxy resin composition obtained above was defoamed in a vacuum for 60 minutes, and then injected into a stainless steel mold set to give a thickness of 4 mm using a 4 mm-thick Teflon (registered trademark) resin spacer. The composition was heat cured at a temperature of 180°C for 40 minutes to obtain a resin cured product having a thickness of 4 mm.

Table 4 shows the properties of the obtained resin cured product. The resin cured product had a wet-Tg of 162°C, a flexural modulus of 3.7 GPa, and a K1c of 0.87 MPa·m^{1/2}, showing high mechanical properties.

### (Preparation of fiber-reinforced composite material)

Next, Carbon fiber multiaxial fabric 1 and Carbon fiber multiaxial fabric 2 were cut to 300 × 300 mm, and 3 sheets of Carbon fiber multiaxial fabric 1 and 3 sheets of Carbon fiber multiaxial fabric 2, 6 sheets in total, were stacked on a release agent-treated aluminum plate of 500 × 500 mm to form a laminate.

Further, on the laminate stacked were a peel cloth of Release Ply C (manufactured by AIRTECH) of a base material imparted with a releasability function, and a resin diffusion base material of Resin Flow 90HT (manufactured by AIRTECH). Subsequently, a hose for forming a resin inlet port and a resin outlet port was arranged, the whole was covered with a nylon bag film and sealed with a sealant tape, and the inside was evacuated. Further, the aluminum plate was heated to 120°C, the pressure inside the bag was evacuated to 5 torr or less, and then the epoxy resin composition prepared above was heated to 100°C and injected into the vacuum system through the resin inlet port.

The injected epoxy resin composition was filled in the bag and impregnated into the laminate, and then the temperature was raised to 180°C and held at 180°C for 40 minutes to obtain carbon fiber-reinforced composite material (CFRP).

Table 4 shows the properties of the obtained CFRP. The CFRP exhibited a CAI of 293 MPa and an RTD-OHC of 338 MPa, showing high mechanical properties.

### [Examples 22 to 29]

The procedure was conducted in the same manner as in Example 21 with the composition changed as shown in Table 4. The properties of the curing agent composition, the epoxy resin composition, the resin cured product and the CFRP are shown in Table 4.

**[Table 4]**

| (Ex: Example)- | | | | Ex 21 | Ex 22 | EX 23 | Ex 24 | EX 25 | Ex 26 | Ex 27 | Ex 28 | Ex 29 |
|---|---|---|---|---|---|---|---|---|---|---|---|---|
| Curing agent composition for thermosetting resin | Curing agent A | M-MIPA | (parts by mass) | 8.0 | 8.0 | 12.0 | 12.0 | 12.0 | 8.0 | 10.0 | 10.0 | 9.0 |
| | Curing agent B | DETDA | (parts by mass) | 11.0 | 11.0 | 7.0 | 7.0 | 7.0 | 10.0 | 8.0 | 8.0 | 10.0 |
| | Curing agent C | 4MxBA | (parts by mass) | | | 1.0 | 1.0 | 1.0 | | 2.0 | 2.0 | 1.0 |
| | | 34DMxBA | (parts by mass) | | | | | | | | | |
| | | 3MxBA | (parts by mass) | | | | | | | | | |
| | | 4MBA | (parts by mass) | | | | | | | | | |
| | | 25DMA | (parts by mass) | 1.0 | 1.0 | | | | 2.0 | | | |
| Epoxy resin | Epoxy resin D | 4,4'-TGDDM | (parts by mass) | | 26.9 | | 23.5 | | 24.5 | | 19.3 | |
| | | 3,4'-TGDDE | (parts by mass) | 26.9 | | 23.5 | | 23.5 | | 17.3 | | 17.7 |
| | Epoxy resin E | GOT | (parts by mass) | | | | | 7.7 | 4.0 | | 7.5 | |
| | | GAN | (parts by mass) | 8.7 | 8.7 | 7.7 | 7.7 | | | | | |
| | | TG-pAP | (parts by mass) | | | | | | 4.0 | | | 8.5 |
| | | 1,6-DON | (parts by mass) | | | | | | | 16.7 | | |
| | | TEPIC | (parts by mass) | | | | | | | | 3.8 | |
| | | DGEBA | (parts by mass) | | | | | | | | | 8.5 |
| Resin particle F \| | | MX-416 | (parts by mass) | 10.6 | 10.6 | 9.7 | 9.7 | 9.7 | 10.0 | 10.2 | 9.4 | 10.5 |
| Proportion of each curing agent component | Proportion of curing agent A | | (mass%) | 40 | 40 | 60 | 60 | 60 | 40 | 50 | 50 | 45 |
| | Proportion of curing agent B | | (mass%) | 55 | 55 | 35 | 35 | 35 | 50 | 40 | 40 | 50 |
| | Proportion of curing agent C | | (mass%) | 5 | 5 | 5 | 5 | 5 | 10 | 10 | 10 | 5 |
| | Proportion of other curing agents | | (mass%) | 0 | 0 | 0 | 0 | 0 | 0 | 0 | 0 | 0 |
| Proportion of each component of epoxy base resin liquid | | Proportion of epoxy resin D | (mass%) | 80 | 80 | 80 | 80 | 80 | 80 | 60 | 70 | 60 |
| | | Proportion of epoxy resin E | (mass%) | 20 | 20 | 20 | 20 | 20 | 20 | 40 | 30 | 40 |
| Mass proportion of resin particles F with respect to total amount of epoxy resin and curing agent (100 mass%) | | | (mass%) | 4 | 4 | 4 | 4 | 4 | 4 | 4 | 4 | 4 |
| Ratio of total number of active hydrogens in amine groups with respect to total number of epoxy groups | | | | 1.0 | 1.0 | 1.0 | 1.0 | 1.0 | 1.0 | 1.0 | 1.0 | 1.0 |
| Properties of curing agent composition for thermosetting resin | | Liquid state retention | | OK | OK | OK | OK | OK | OK | OK | OK | OK |
| Epoxy resin composition properties | | Initial viscosity (120°C) | (mPa·s) | 18 | 16 | 25 | 22 | 20 | 26 | 19 | 18 | 23 |
| | | Pot life (120°C) | (min) | 68 | 62 | 43 | 42 | 51 | 45 | 38 | 49 | 59 |
| Epoxy resin cured product properties | | wet-Tg | (°C) | 162 | 159 | 163 | 163 | 158 | 161 | 165 | 161 | 166 |
| | | RTD-FM | (GPa) | 3.7 | 3.5 | 3.8 | 3.5 | 3.7 | 3.5 | 3.6 | 3.6 | 3.5 |
| | | K1c | (MPa·m^{1/2}) | 0.87 | 0.85 | 0.86 | 0.85 | 0.89 | 0.85 | 0.90 | 0.86 | 0.91 |
| CFRP properties | | CAI | (MPa) | 293 | 289 | 297 | 284 | 295 | 281 | 307 | 301 | 316 |
| | | RTD-OHC | (MPa) | 338 | 322 | 343 | 329 | 332 | 318 | 326 | 329 | 327 |

All of the curing agent compositions retained a liquid state for one week or longer. All of the epoxy resin compositions exhibited a low viscosity of 50 mPa·s or less at 120°C and a pot life of 20 minutes or more. All of the resin cured products exhibited a flexural modulus of 3.5 GPa or more and a K1c of 0.85 MPa·m^{1/2} or more, showing high mechanical properties. All of the CFRPs exhibited a CAI of 281 MPa or more and an RTD-OHC of 318 MPa or more, showing high mechanical properties.

### [Industrial Applicability]

The curing agent composition for thermosetting resin and the epoxy resin composition of the present invention can be used in the production of fiber-reinforced composite materials. The fiber-reinforced composite material obtained in accordance with the present invention can be used, for example, as materials of aircraft and automobiles.

## Claims

1. A curing agent composition for thermosetting resin, comprising: a curing agent A, a curing agent B, and a curing agent C, wherein the curing agent A is an aromatic polyamine having a substituent selected from an alkyl group, an aromatic group, and a halogen group at each of two ortho positions of an amino group, the curing agent B is an aromatic polyamine that is liquid at 25°C, and the curing agent C is a monoamine having an aromatic substituent.

2. The curing agent composition for thermosetting resin according to claim 1, wherein the curing agent C of monoamine having an aromatic substituent has two or more substituents.

3. The curing agent composition for thermosetting resin according to claim 2, wherein the substituents of the curing agent C of monoamine having an aromatic substituent are all aliphatic groups and/or alkoxy groups.

4. The curing agent composition for thermosetting resin according to claim 2, wherein the substituents of the curing agent C of monoamine having an aromatic substituent are all aliphatic groups having 1 to 4 carbon atoms.

5. The curing agent composition for thermosetting resin according to claim 2, wherein the substituents of the curing agent C of monoamine having an aromatic substituent are all methyl groups.

6. The curing agent composition for thermosetting resin according to claim 1, wherein the curing agent C of monoamine having an aromatic substituent is a benzylamine derivative.

7. The curing agent composition for thermosetting resin according to claim 6, wherein the curing agent C of benzylamine derivative is a benzylamine derivative having an aliphatic group and/or an alkoxy group.

8. The curing agent composition for thermosetting resin according to claim 1, wherein the curing agent A of aromatic polyamine is an aromatic diamine.

9. The curing agent composition for thermosetting resin according to claim 1, wherein the curing agent A of aromatic polyamine is a 4,4'-diaminodiphenylmethane derivative.

10. The curing agent composition for thermosetting resin according to claim 1, wherein the curing agent B of aromatic polyamine is a phenylenediamine derivative or a 4,4'-diaminodiphenylmethane derivative.

11. The curing agent composition for thermosetting resin according to claim 1, wherein the total mass of the curing agent A, the curing agent B, and the curing agent C is 70 to 100 mass% with respect to the total mass of the curing agent composition for thermosetting resin, a mass ratio of the curing agent A to the curing agent B is 1:99 to 99:1, and the curing agent C is 1 to 43 parts by mass with respect to the total of 100 parts by mass of the curing agent A and the curing agent B.

12. The curing agent composition for thermosetting resin according to claim 1, wherein the composition is a uniform liquid at a temperature of 80 to 200°C, and is a uniform liquid after ramp up to 200°C and ramp down to 25°C of a liquid temperature and standing at 25°C for 1 week.

13. An epoxy resin composition comprising: the curing agent composition for thermosetting resin according to any one of claims 1 to 12, and an epoxy resin D and an epoxy resin E, wherein the epoxy resin D is an epoxy resin constituted by a monomer containing four or more glycidyl groups, and the epoxy resin E is an epoxy resin constituted by a monomer containing two or three glycidyl groups.

14. The epoxy resin composition according to claim 13, wherein the monomer containing 4 or more glycidyl groups of the epoxy resin D is represented by the following chemical formula. 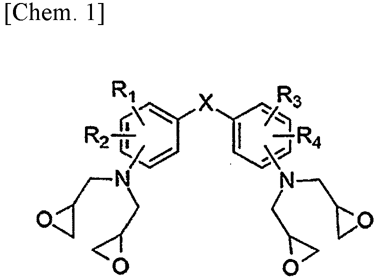 (In the chemical formula, Ri to R₄ each independently represent one selected from the group consisting of a hydrogen atom, an aliphatic hydrocarbon group, an alicyclic hydrocarbon group, and a halogen atom, and X represents one selected from the group consisting of -CH₂-, -O-, -S-, -CO-, -C(=O)O-, -O-C(=O)-, -NHCO-, -CONH-, and - SO₂-.)

15. The epoxy resin composition according to claim 13, wherein the monomer containing 4 or more glycidyl groups of the epoxy resin D is one or a combination of two or more selected from the group consisting of tetraglycidyl-4,4'-diaminodiphenyl ether, tetraglycidyl-4,4'-diaminodiphenyl methane, tetraglycidyl-3,4'-diaminodiphenyl ether, and tetraglycidyl-3,3'-diaminodiphenyl methane.

16. The epoxy resin composition according to claim 13, wherein the monomer containing two or three glycidyl groups of the epoxy resin E is one or a combination of two or more selected from the group consisting of diglycidylaniline, diglycidyl-o-toluidine, triglycidyl-p-aminophenol, triglycidyl-m-aminophenol, 1,6-bis(2,3-epoxypropan-1-yloxy)naphthalene, 1,3,5-triglycidyl isocyanurate, and bisphenol A diglycidyl ether.

17. The epoxy resin composition according to claim 13, wherein the ratio of the total number of epoxy groups in the epoxy resin composition and the number of active hydrogens contained in the curing agent composition for thermosetting resin is 0.7 to 1.3.

18. The epoxy resin composition according to claim 13, wherein the epoxy resin D is contained in an amount of 50 to 90 mass% with respect to the total mass of the epoxy resins contained in the epoxy resin composition.

19. The epoxy resin composition according to claim 13, wherein the total mass of the curing agent A, the curing agent B, and the curing agent C is 70 to 100 mass% with respect to the total mass of the curing agents contained in the epoxy resin composition, a mass ratio of the curing agent A to the curing agent B is 1:99 to 99: 1, and the curing agent C is 1 to 43 parts by mass with respect to the total of 100 parts by mass of the curing agent A and the curing agent B.

20. An epoxy resin cured product obtained by curing the epoxy resin composition according to claim 13.

21. A fiber-reinforced composite material comprising the epoxy resin cured product according to claim 20 and a fiber reinforcing base material.

22. The fiber-reinforced composite material according to claim 21, wherein the fiber reinforcing base material is a carbon fiber reinforcing base material.

23. A method for producing a fiber-reinforced composite material, comprising compositing and curing a fiber reinforcing base material and the epoxy resin composition according to claim 13.

24. A method for producing a fiber-reinforced composite material, comprising a step of impregnating the epoxy resin composition according to claim 13 into a fiber reinforcing base material arranged in a mold, and then performing heat curing.

25. The method for producing a fiber-reinforced composite material according to claim 24, further comprising a step of obtaining an epoxy resin composition by mixing the curing agent composition for thermosetting resin according to any one of claims 1 to 12 and an epoxy base resin just before impregnation into a fiber reinforcing base material placed in a mold.

26. A curing agent composition for thermosetting resin, comprising a curing agent C, the curing agent C being a monoamine having an aromatic substituent.

27. The curing agent composition for thermosetting resin according to claim 26, wherein the curing agent C of monoamine having an aromatic substituent has two or more substituents.

28. The curing agent composition for thermosetting resin according to claim 26, wherein the curing agent C of monoamine having an aromatic substituent is a benzylamine derivative.
